# EUROPÄISCHE PATENTSCHRIFT

(11) **EP 1 783 388 B1**
(45) Veröffentlichungstag und Bekanntmachung des Hinweises auf die Patenterteilung: **02.07.2014**
(21) Anmeldenummer: 06021387.3
(22) Anmeldetag: 12.10.2006
(51) Int. Cl.: F16D 13/52, F16D 13/72

(54) **Lamellenkupplungseinrichtung**
Multi-disc clutch device
Dispositif d'embrayage à disques multiples

(30) Priorität: 04.11.2005 DE 102005052778
(43) Veröffentlichungstag der Anmeldung: 09.05.2007
(73) Patentinhaber: Schaeffler Technologies GmbH & Co. KG, 91074 Herzogenaurach (DE)
(72) Erfinder: Nöhl, Oliver, 77830 Bühlertal (DE); Speck, Andre, 76316 Malsch (DE); Agner, Ivo, 77815 Bühl (DE)

(56) Entgegenhaltungen:
- EP-A- 0 945 636
- EP-A- 1 422 430
- EP-A- 1 686 277
- DE-A1- 4 408 666
- FR-A- 2 826 415
- US-A- 6 116 398

## Beschreibung

Die Erfindung betrifft eine Lamellenkupplungseinrichtung mit den Merkmalen gemäß dem Oberbegriff des Anspruchs 1.

Die US-Patentschrift 6,116,398 offenbart eine Lamellenkupplung mit einem flanschartigen Bauteil und einem einem Kopplungsteil entsprechenden Bauteil. Die DE 44 08 666 A1 offenbart eine Lamellenkupplung mit Abstandshalter. Die FR 2 826 415 A1 offenbart eine Kupplung mit einer Vielzahl von Kupplungsscheiben in der Form von Reibscheiben und Druckscheiben, die zwischen einem Kupplungskorb und einer Kupplungsnabe angeordnet sind. Die EP 1 686 277 A1 offenbart eine Doppelkupplung, wobei jede der Kupplungen ein Lamellenpaket mit Außenlamellen und Innenlamellen aufweist. Die EP 1 422 430 offenbart einen topfförmigen, ab Blechpress-und-stanzbauteil ausgebildeten Außenlamellenträger.

Aufgabe der Erfindung ist es, eine Lamellenkupplungseinrichtung gemäß dem Oberbegriff des Anspruchs 1 zu schaffen, die kostengünstig herstellbar ist und eine lange Lebensdauer aufweist.

Die Aufgabe wird durch eine Lamellenkupplungseinrichtung mit den Merkmalen gemäß Anspruch 1 gelöst.

Die Aufgabe ist also, bei einer Lamellenkupplungseinrichtung mit mindestens einer Lamellenkupplung, die einen Außenlamellenträger für Außenlamellen umfasst, die zur Übertragung eines Drehmoments mit Innenlamellen in Reibeingriff bringbar sind, die an einem Innenlamellenträger angebracht sind, dadurch gelöst, dass an dem Außenlamellenträger und/oder dem Innenlamellenträger ein Kopplungsteil angebracht ist, das einen Formschlussbereich aufweist, der dazu dient, den Lamellenträger drehfest mit den zugehörigen Lamellen zu verbinden. Vorzugsweise dient das Kopplungsteil sowohl zur axialen als auch zur radialen Fixierung der zugehörigen Lamellen. Das separate Kopplungsteil liefert den Vorteil, dass es bezüglich seines Grundwerkstoffs und einer Oberflächenbehandlung, unabhängig von weiteren Teilen der Lamellenträger, optimal auf seine Drehmomentübertragungsfunktion abgestimmt werden kann. Ein wesentlicher Vorteil ist zum Beispiel, dass die Lamellenträger nicht komplett beschichtet werden müssen, sondern nur das mit dem Formschlussbereich ausgestattete Kopplungsteil. Der Formschlussbereich wird vorzugsweise von einer Verzahnung gebildet, die sich mit einer komplementär ausgebildeten Verzahnung in Eingriff befindet, die an den zugehörigen Lamellen vorgesehen ist. Bei der Herstellung des Formschlussbereichs, insbesondere der Verzahnung, durch Umformen kann in vorteilhafter Weise die Kaltverfestigung aus dem Formprozess ausgenutzt werden. Die Lamellenkupplungseinrichtung ist dadurch gekennzeichnet, dass das Kopplungsteil, insbesondere der Materialstreifen, die Gestalt eines Kopplungsrings aufweist. Vorzugsweise wird der Materialstreifen erst nach dem Ausbilden des Formschlussbereichs, insbesondere der Verzahnung, in den Kopplungsring umgeformt.

Ein bevorzugtes Ausführungsbeispiel der Lamellenkupplungseinrichtung ist dadurch gekennzeichnet, dass das Kopplungsteil aus einem umgeformten Materialstreifen gebildet ist. Das liefert den Vorteil, dass der Formschlussbereich, insbesondere die Verzahnung, mit Hilfe eines relativ einfachen Umformwerkzeugs in dem Materialstreifen ausgebildet werden kann. Bei dem verwendeten Material handelt es sich vorzugsweise um Metallblech. Der Materialstreifen hat im Ausgangszustand im Wesentlichen die Gestalt eines Rechtecks.

Ein weiteres bevorzugtes Ausführungsbeispiel der Lamellenkupplungseinrichtung ist dadurch gekennzeichnet, dass der Kopplungsring an den Enden des Materialstreifens geschlossen ist. Die Enden des Materialstreifens sind zum Beispiel durch eine Schweißnaht stoffschlüssig miteinander verbunden. Die Enden des Materialstreifens können aber auch durch eine geeignete Schlossgeometrie formschlüssig miteinander verbunden sein. Der Kopplungsring kann auch offen ausgebildet sein.

Ein weiteres bevorzugtes Ausführungsbeispiel der Lamellenkupplungseinrichtung ist dadurch gekennzeichnet, dass der Kopplungsring mehrere sich in radialer Richtung erstreckende Durchgangslöcher aufweist. Die Durchgangslöcher ermöglichen den Durchtritt eines Betriebsfluids durch den Kopplungsring. Bei dem Betriebsfluid handelt es sich vorzugsweise um ein Kühlmedium, mit dem Reibungswärme abgeführt werden kann, die im Betrieb der Lamellenkupplungseinrichtung an den Lamellen auftritt. Durch die Durchgangslöcher kann den zugehörigen Lamellen, die auch als Lamellenpaket bezeichnet werden, ein ausreichender Kühlvolumenstrom zugeführt beziehungsweise von diesen abgeführt werden.

Ein weiteres bevorzugtes Ausführungsbeispiel der Lamellenkupplungseinrichtung ist dadurch gekennzeichnet, dass von mindestens einer Stirnseite des Kopplungsrings Befestigungsfinger ausgehen. Die Befestigungsfinger erstrecken sich vorzugsweise von beiden Stirnseiten des Kopplungsrings im Wesentlichen in axialer Richtung.

Ein weiteres bevorzugtes Ausführungsbeispiel der Lamellenkupplungseinrichtung ist dadurch gekennzeichnet, dass die freien Enden der Befestigungsfinger nietkopfartig verformt sind, um ein Flanschelement beziehungsweise ein Wandelement nietartig mit dem Kopplungsring zu verbinden. Dadurch wird eine stabile Befestigung des Kopplungsrings an dem Flanschelement beziehungsweise dem Wandelement gewährleistet.

Ein weiteres bevorzugtes Ausführungsbeispiel der Lamellenkupplungseinrichtung ist dadurch gekennzeichnet, dass die freien Enden der Befestigungsfinger umgebogen sind, um ein Flanschelement beziehungsweise ein Wandelement mit dem Kopplungsring zu verbinden. Dadurch wird eine stabile Befestigung des Kopplungsrings an dem Flanschelement beziehungsweise dem Wandelement gewährleistet.

Ein weiteres bevorzugtes Ausführungsbeispiel der Lamellenkupplungseinrichtung ist dadurch gekennzeichnet, dass die Befestigungsfinger, die von der einen Stirnseite des Kopplungsrings ausgehen, ein Flanschelement durchgreifen, das von einem Nabenteil ausgeht. Das Flanschelement und das Nabenteil stellen Teile des Lamellenträgers dar und können einstückig miteinander verbunden oder als separate Teile ausgeführt sein. Die freien Enden der Befestigungsfinger können umgebogen sein, um ein Lösen des Kopplungsrings von dem Flanschelement zu verhindern. Die freien Enden der Befestigungsfinger können aber auch nietkopfartig ausgebildet sein, um den Kopplungsring nietartig mit dem Flanschelement zu verbinden.

Ein weiteres bevorzugtes Ausführungsbeispiel der Lamellenkupplungseinrichtung ist dadurch gekennzeichnet, dass das Nabenteil aus einem Blechteil geformt ist. Alternativ kann die Nabe aber auch als Schmiedeteil, Gussteil oder Sinterteil ausgeführt sein.

Ein weiteres bevorzugtes Ausführungsbeispiel der Lamellenkupplungseinrichtung ist dadurch gekennzeichnet, dass die Befestigungsfinger, die von der anderen Stirnseite des Kopplungsrings ausgehen, ein Wandelement durchgreifen. Das Wandelement dient dazu, eine Seite eines Kühlmediumsdurchtrittsraums zu begrenzen, der auch als Druckraum bezeichnet wird. Der Kühlmediumsdurchtrittsraum hat im Wesentlichen die Gestalt eines Ringraums, der in radialer Richtung von dem Nabenteil und dem Kopplungsring begrenzt wird. In axialer Richtung wird der Ringraum von dem Flanschelement und dem Wandelement begrenzt. Die freien Enden der Befestigungsfinger können umgebogen sein, um ein Lösen des Kopplungsrings von dem Wandelement zu verhindern, und umgekehrt. Die freien Enden der Befestigungsfinger können aber auch nietkopfartig ausgebildet sein, um den Kopplungsring nietartig mit dem Wandelement zu verbinden.

Ein weiteres bevorzugtes Ausführungsbeispiel der Lamellenkupplungseinrichtung ist dadurch gekennzeichnet, dass radial innen von dem Wandelement Klauen ausgehen, die in das Nabenteil eingreifen. Vorzugsweise sind die am Innendurchmesser des Wandelements vorgesehenen Klauen mit dem Nabenteil verstemmt. Die Verstemmung dient sowohl zur radialen als auch zur axialen Fixierung des Wandelements an dem Nabenteil. Alternativ können örtliche Schweißpunkte vorgesehen werden.

Ein weiteres bevorzugtes Ausführungsbeispiel der Lamellenkupplungseinrichtung ist dadurch gekennzeichnet, dass innen von dem Wandelement Leitrippen in axialer Richtung abstehen. Die Leitrippen erstrecken sich im Wesentlichen in radialer Richtung und begrenzen in radialer Richtung verlaufende Kanäle für das Kühlmedium, die radial innen und radial außen offen sind. Durch die Leitrippen können, in ähnlicher Art und Weise wie bei einer Kreiselpumpe, die Rotation des Kühlmediums und damit die Entstehung eines Fliehkraftdrucks in dem Kühlmediumsdurchtrittsraum unterstützt werden.

Ein weiteres bevorzugtes Ausführungsbeispiel der Lamellenkupplungseinrichtung ist dadurch gekennzeichnet, dass die Seitenflächen eines in axialer Richtung von dem Wandelement und dem Flanschelement begrenzten Kühlmediumsdurchtrittsraums geschlossen sind. Der von der Innenlamellenträgerbaugruppe gebildete Kühlmediumsdurchtrittsraum wird auch als Druckraum bezeichnet.

Ein weiteres bevorzugtes Ausführungsbeispiel der Lamellenkupplungseinrichtung ist dadurch gekennzeichnet, dass die projizierten Seitenflächen eines in axialer Richtung von dem Wandelement und dem Flanschelement begrenzten Kühlmediumsdurchtrittsraums nahezu gleich groß sind. Dadurch wird erreicht, dass der Lamellenträger aufgrund des Kühlmediumsdrucks im Betrieb der Lamellenkupplungseinrichtung nur eine geringe Axialkraft auf die umgebenden Bauteile ausübt.

Ein weiteres bevorzugtes Ausführungsbeispiel der Lamellenkupplungseinrichtung ist dadurch gekennzeichnet, dass das Wandelement radial innen, im Querschnitt betrachtet, eine Stufe aufweist. Die Stufe bildet einen Lagersitz für ein Kühlmediumsleitblech.

Ein weiteres bevorzugtes Ausführungsbeispiel der Lamellenkupplungseinrichtung ist dadurch gekennzeichnet, dass der Kopplungsring eine Außenverzahnung aufweist. Die Außenverzahnung dient dazu, die zugehörigen Innenlamellen formschlüssig mit dem Innenlamellenträger zu verbinden. Innen kann der Kopplungsring die Gestalt eines Kreiszylindermantels aufweisen.

Ein weiteres bevorzugtes Ausführungsbeispiel der Lamellenkupplungseinrichtung ist dadurch gekennzeichnet, dass die Außenverzahnung stirnseitig nahezu flüssigkeitsdicht abgeschlossen ist. Vorzugsweise ist zu diesem Zweck ein hütchenartiges Abdeckelement radial außen an dem Flanschelement befestigt. Das Abdeckelement kann als Blechformteil und als Kunststoffspritzgießteil ausgebildet sein.

Weitere bevorzugte Ausführungsbeispiele der Lamellenkupplungseinrichtung sind dadurch gekennzeichnet, dass die Außenverzahnung des Kopplungsrings einen Zahnkopfdurchmesser aufweist, der kleiner als oder gleich groß wie der Außendurchmesser des Flanschelements und der Außendurchmesser des Wandelements ist. Dadurch wird die Außenverzahnung an beiden Stirnseiten nahezu flüssigkeitsdicht abgeschlossen, um einen seitlichen Abfluss des Kühlmediums zu verhindern.

Ein weiteres bevorzugtes Ausführungsbeispiel der Lamellenkupplungseinrichtung ist dadurch gekennzeichnet, dass das Wandelement den Kopplungsring radial außen umgreift. In Kombination mit einem möglichst geringen Spalt zwischen dem Außendurchmesser des Flanschelements und dem Innendurchmesser der zugehörigen Lamellen entsteht eine Kombination aus einer Spalt- und einer Labyrinthdichtung, die den Anteil des Kühlmediums, der nicht durch das Lamellenpaket fließt, minimiert.

Ein weiteres bevorzugtes Ausführungsbeispiel der Lamellenkupplungseinrichtung ist dadurch gekennzeichnet, dass der Kopplungsring eine Innenverzahnung aufweist, die sich mit einer komplementären Außenverzahnung in Eingriff befindet, die an einem Flanschelement ausgebildet ist, das von einem Nabenteil ausgeht. Das Flanschelement und das Nabenteil stellen Teile des Lamellenträgers dar und können einstückig miteinander verbunden oder als separate Teile ausgeführt sein.

Ein weiteres bevorzugtes Ausführungsbeispiel der Lamellenkupplungseinrichtung ist dadurch gekennzeichnet, dass das Nabenteil aus einem Blechteil gebildet ist. Alternativ kann die Nabe aber auch als Schmiedeteil, Gussteil oder Sinterteil ausgeführt sein.

Ein weiteres bevorzugtes Ausführungsbeispiel der Lamellenkupplungseinrichtung ist dadurch gekennzeichnet, dass der Kopplungsring im Eingriffsbereich mit dem Flanschelement in Umfangsrichtung verlaufende, in axialer Richtung paarweise gegenüberliegende Stege aufweist, zwischen denen das Flanschelement in axialer Richtung fixiert ist. Bei der Herstellung wird der Kopplungsring über das außenverzahnte Flanschteil gerollt und/oder geformt. Anschließend kann der Kopplungsring am Stoß stoffschlüssig oder formschlüssig geschlossen werden.

Ein weiteres bevorzugtes Ausführungsbeispiel der Lamellenkupplungseinrichtung ist dadurch gekennzeichnet, dass der Kopplungsring eine Innenverzahnung aufweist. Die Innenverzahnung dient dazu, die zugehörigen Außenlamellen formschlüssig mit dem Außenlamellenträger zu verbinden. Außen kann der Kopplungsring die Gestalt eines Kreiszylindermantels aufweisen. Der Kopplungsring kann aber auch eine Außenverzahnung aufweisen, die sich mit einer komplementären Innenverzahnung in Eingriff befindet, die an einem Aufnahmetopf ausgebildet ist.

Ein weiteres bevorzugtes Ausführungsbeispiel der Lamellenkupplungseinrichtung ist dadurch gekennzeichnet, dass der Außenlamellenträger einen Aufnahmetopf aufweist, in dem der Kopplungsring aufgenommen ist. Bei der Herstellung des Außenlamellenträgers wird der Kopplungsring in den Aufnahmetopf gefügt. Durch das Fügen des Kopplungsrings wird der offene Ring radial unter Drehzahl abgestützt.

Ein weiteres bevorzugtes Ausführungsbeispiel der Lamellenkupplungseinrichtung ist dadurch gekennzeichnet, dass der Aufnahmetopf einen hülsenförmigen Aufnahmeabschnitt aufweist. Der Aufnahmeabschnitt hat im Wesentlichen die Gestalt eines Kreiszylindermantels, dessen Innendurchmesser dem Außendurchmesser des Kopplungsrings entspricht.

Ein weiteres bevorzugtes Ausführungsbeispiel der Lamellenkupplungseinrichtung ist dadurch gekennzeichnet, dass der Aufnahmeabschnitt in einem axialen Randbereich in Umfangsrichtung verlaufende Nuten aufweist. Die Nuten dienen zur Aufnahme beziehungsweise Abstützung der Enden von Hebelfederarmen einer Hebelfedereinrichtung, mit denen die Lamellenkupplungseinrichtung betätigt wird.

Ein weiteres bevorzugtes Ausführungsbeispiel der Lamellenkupplungseinrichtung ist dadurch gekennzeichnet, dass der Aufnahmeabschnitt in einem axialen Randbereich radiale Aussparungen aufweist. Die Aussparungen dienen zur Aufnahme der Enden von Hebelfederarmen einer Hebelfedereinrichtung, um die Hebelfedereinrichtung gegen Verdrehen zu sichern.

Ein weiteres bevorzugtes Ausführungsbeispiel der Lamellenkupplungseinrichtung ist dadurch gekennzeichnet, dass der Aufnahmeabschnitt Langlöcher aufweist, die länger als Langlöcher sind, die in dem Kopplungsring ausgespart sind. Die Langlöcher ermöglichen den Durchtritt von Kühlmedium.

Ein weiteres bevorzugtes Ausführungsbeispiel der Lamellenkupplungseinrichtung ist dadurch gekennzeichnet, dass der in die Langlöcher des Aufnahmeabschnitts überstehende Überstand der Langlöcher des Kopplungsrings mit dem Randbereich der Langlöcher des Aufnahmeabschnitts verstemmt ist. Alternativ kann der Kopplungsring, zum Beispiel durch Schweißen, stoffschlüssig mit dem Aufnahmeabschnitt oder einem anderen Teil des Außenlamellenträgers verbunden sein.

Ein weiteres bevorzugtes Ausführungsbeispiel der Lamellenkupplungseinrichtung ist dadurch gekennzeichnet, dass sich von einer Stirnseite des Aufnahmeabschnitts ein Flansch radial nach innen erstreckt. Vorzugsweise erstreckt sich von der anderen Stirnseite des Aufnahmeabschnitts ein Flansch radial nach außen.

Ein weiteres bevorzugtes Ausführungsbeispiel der Lamellenkupplungseinrichtung ist dadurch gekennzeichnet, dass sich von einer Stirnseite des Kopplungsrings Befestigungsfinger erstrecken, die den Flansch durchgreifen. Die Befestigungsfinger erstrecken sich im Wesentlichen in axialer Richtung. Die freien Enden der Befestigungsfinger können umgebogen sein, um ein Lösen des Kopplungsrings von dem Flansch zu verhindern. Die freien Enden der Befestigungsfinger können aber auch nietkopfartig ausgebildet sein, um den Kopplungsring nietartig mit dem Flansch zu verbinden.

Ein weiteres bevorzugtes Ausführungsbeispiel der Lamellenkupplungseinrichtung ist dadurch gekennzeichnet, dass die freien Enden der Befestigungsfinger nietkopfartig verformt sind, um den Aufnahmetopf mit dem Kopplungsring nietartig zu verbinden. Dadurch wird eine stabile Befestigung des Aufnahmetopfs an dem Kopplungsring gewährleistet.

Ein weiteres bevorzugtes Ausführungsbeispiel der Lamellenkupplungseinrichtung ist dadurch gekennzeichnet, dass die freien Enden der Befestigungsfinger umgebogen sind, um den Aufnahmetopf an dem Kopplungsring zu befestigen. Dadurch wird eine stabile Befestigung des Aufnahmetopfs an dem Kopplungsring gewährleistet.

Ein weiteres bevorzugtes Ausführungsbeispiel der Lamellenkupplungseinrichtung ist dadurch gekennzeichnet, dass die Oberfläche des Kopplungsteils zur Erhöhung der Verschleißbeständigkeit beschichtet ist. Durch die Beschichtung kann die Lebensdauer des Kopplungsteils deutlich erhöht werden.

Die Erfindung betrifft auch eine Drehmomentübertragungseinrichtung im Antriebsstrang eines Kraftfahrzeugs zur Übertragung von Drehmoment zwischen einer Brennkraftmaschine mit einer Kurbelwelle und einem Getriebe mit zumindest einer Getriebeeingangswelle, die mittels einer vorab beschriebenen Lamellenkupplungseinrichtung mit der Kurbelwelle koppelbar ist. Vorzugsweise umfasst die in nasser Betriebsweise betriebene Lamellenkupplung antriebsseitige Außenlamellen und abtriebsseitige Innenlamellen, die mittels axialer Verpressung entlang einer Rotationsachse der Getriebeeingangswelle miteinander zur Bildung eines Reibeingriffs beaufschlagbar sind. Die Lamellen sind schichtweise in axialer Richtung antriebsseitig und abtriebsseitig abwechselnd angeordnet.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 die Darstellung eines Längsschnitts durch eine Drehmomentübertragungseinrichtung im Antriebsstrang eines Kraftfahrzeugs;
Figur 2 einen Kopplungsring gemäß einem Ausführungsbeispiel in der Draufsicht;
Figur 3 die Ansicht eines Schnitts entlang der Linie III-III in Figur 2;
Figur 4 eine Abwicklung in Blickrichtung eines Pfeils IV in Figur 2;
Figur 5 einen Innenlamellenträger mit einem Kopplungsring, wie er in den Figuren 2 bis 4 dargestellt ist, in einer teilweise aufgebrochenen Draufsicht;
Figur 6 die Ansicht eines Schnitts entlang der Linie VI-VI in Figur 5;
Figur 7 eine Ansicht auf den Innenlamellenträger in Blickrichtung eines Pfeils VII in Figur 6;
Figur 8 einen vergrößerten Halbschnitt des Innenlamellenträgers gemäß einem weiteren Ausführungsbeispiel;
Figur 9 einen vergrößerten Halbschnitt des in Figur 6 dargestellten Lamellenträgers;
Figur 10 einen Halbschnitt durch eine Lamellenkupplung mit einem Innenlamellenträger, wie er in Figur 9 dargestellt ist;
Figur 11 einen vergrößerten Ausschnitt aus Figur 10;
Figuren 12 bis 16 die Fertigungsreihenfolge des in den Figuren 5 bis 9 dargestellten Innenlamellenträgers;
Figur 17 einen Innenlamellenträger gemäß einem weiteren Ausführungsbeispiel in der Draufsicht;
Figur 18 die Ansicht eines Schnitts entlang der Linie XVIII-XVIII in Figur 17;
Figur 19 eine Abwicklung in Blickrichtung eines Pfeils IXX in Figur 17;
Figuren 20 bis 23 die Fertigungsreihenfolge des in den Figuren 17 bis 19 dargestellten Innenlamellenträgers;
Figur 24 eine formschlüssige Verbindung zwischen zwei Enden eines Kopplungsrings;
Figur 25 einen Außenlamellenträger gemäß einem Ausführungsbeispiel in der Draufsicht;
Figur 26 einen Schnitt entlang der Linie XXVI-XXVI in Figur 25;
Figur 27 einen Ausschnitt eines Kopplungsrings des in den Figuren 25 und 26 dargestellten Außenlamellenträgers in der Draufsicht;
Figur 28 die Ansicht eines Schnitts entlang der Linie XXVIII-XXVIII in Figur 27;
Figur 29 die Ansicht eines Schnitts entlang der Linie XXX-IXXX in Figur 27;
Figur 30 eine Abwicklung in Blickrichtung eines Pfeils XXX in Figur 27;
Figur 31 einen vergrößerten Halbschnitt aus Figur 26 vor dem Verstemmen des Kopplungsrings;
Figur 32 die gleiche Ansicht wie in Figur 31 nach dem Verstemmen des Kopplungsrings;
Figur 33 eine ähnliche Darstellung wie in Figur 26 gemäß einem weiteren Ausführungsbeispiel;
Figur 34 eine ähnliche Darstellung wie in Figur 26 gemäß einem weiteren Ausführungsbeispiel;
Figuren 35 bis 38 die Fertigungsreihenfolge des in den Figuren 25 bis 34 dargestellten Außenlamellenträgers;
Figur 39 einen Innenlamellenträger, der einstückig mit einem Kopplungsring verbunden ist, im Halbschnitt mit einem aufgesteckten Abdeckelement und
Figur 40 einen Innenlamellenträger, der einstückig mit einem Kopplungsring verbunden ist, im Halbschnitt mit einem angeschweißten Abdeckelement.

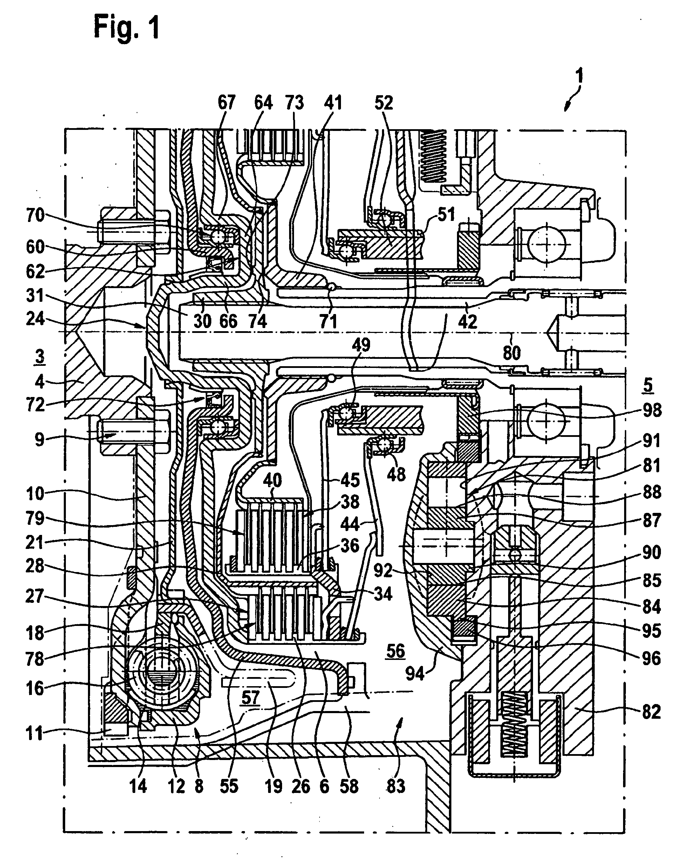

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine nasslaufende Doppelkupplung 6 in Lamellenbauweise angeordnet. Zwischen die Antriebseinheit 3 und die Doppelkupplung 6 ist eine Schwingungsdämpfungseinrichtung 8 geschaltet. Bei der Schwingungsdämpfungseinrichtung 8 handelt es sich um ein Zweimassenschwungrad.

Die Kurbelwelle 4 der Brennkraftmaschine 3 ist über eine Schraubverbindung 9 fest mit einem Eingangsteil 10 der Schwingungsdämpfungseinrichtung 8 verbunden. Das Eingangsteil 10 der Schwingungsdämpfungseinrichtung 8 hat im Wesentlichen die Gestalt einer sich in radialer Richtung angeordneten Kreisringscheibe, an die radial außen ein Anlasserzahnkranz 11 angeschweißt ist. Außerdem ist an das Eingangsteil 10 der Schwingungsdämpfungseinrichtung 8 eine Schwungmasse 12 angeschweißt. Des Weiteren ist an dem Eingangsteil 10 der Schwingungsdämpfungseinrichtung 8 ein Schwingungsdämpferkäfig 14 befestigt, in dem mehrere Energiespeichereinrichtungen, insbesondere Federeinrichtungen 16, zumindest teilweise aufgenommen sind. In die Federeinrichtungen 16 greift ein Ausgangsteil 18 der Schwingungsdämpfungseinrichtung 8 ein. An dem Ausgangsteil 18 der Schwingungsdämpfungseinrichtung 8 ist eine weitere Schwungmasse 19 befestigt. Das Ausgangsteil 18 der Schwingungsdämpfungseinrichtung 8 ist über ein Verbindungsteil 21 fest mit einem Eingangsteil 24 der Doppelkupplung 6 verbunden. Das Kupplungseingangsteil 24 ist einstückig mit einem Außenlamellenträger 26 einer ersten Lamellen-Kupplungsanordnung 27 verbunden. Radial innerhalb des Außenlamellenträgers 26 ist ein Innenlamellenträger 28 der ersten Lamellen-Kupplungsanordnung 27 angeordnet. Der Innenlamellenträger 28 ist radial innen an einem Nabenteil 30 befestigt, das über eine Verzahnung drehfest mit einer ersten Getriebeeingangswelle 31 verbunden ist.

Das Kupplungseingangsteil 24 beziehungsweise der einstückig mit diesem verbundene Außenlamellenträger 26 der ersten Lamellen-Kupplungsanordnung 27 ist über ein Verbindungsteil 34 drehfest mit einem Außenlamellenträger 36 einer zweiten Lamellen-Kupplungsanordnung 38 verbunden. Radial innerhalb des Außenlamellenträgers 36 ist ein Innenlamellenträger 40 der zweiten Lamellen-Kupplungsanordnung 38 angeordnet, der radial innen fest mit einem Nabenteil 41 verbunden ist. Das Nabenteil 41 ist über eine Verzahnung drehfest mit einer zweiten Getriebeeingangswelle 42 verbunden, die als Hohlwelle ausgebildet ist. In der zweiten Getriebeeingangswelle 42 ist die erste Getriebeeingangswelle 31 drehbar angeordnet. Die Kolben werden in dieser Figur von Hebeln betätigt.

Die beiden Lamellen-Kupplungsanordnungen 27 und 38 werden über Betätigungshebel 44 und 45 betätigt, deren radial inneren Enden sich an Betätigungslagern 48, 49 abstützen. Die Betätigungslager 48, 49 werden mit Hilfe von Betätigungskolben 51, 52 in axialer Richtung betätigt. Die Betätigungskolben 51, 52 sind gegenüber den sich mit dem Kupplungseingangsteil 24 drehenden Betätigungshebeln 44, 45 feststehend angeordnet.

Zwischen dem Verbindungsteil 21 und dem Außenlamellenträger 26 der ersten Lamellen-Kupplungsanordnung 27 ist ein Kupplungsdeckel 55 angeordnet, der radial außen an einem Getriebegehäuseabschnitt 58 befestigt ist. Der Kupplungsdeckel 55 kann auch einstückig mit dem Getriebegehäuseabschnitt 58 ausgebildet sein. Der Kupplungsdeckel 55 trennt einen Nassraum 56, in dem die beiden Lamellen-Kupplungsanordnungen 27 und 38 angeordnet sind, von einem trockenen Aufnahmeraum 57, in dem die Schwingungsdämpfungseinrichtung 8 angeordnet ist. Der Kupplungsdeckel 55 weist radial innen ein, im Querschnitt betrachtet, im Wesentlichen L-förmiges Ende 60 auf, das in einen Ringraum 62 ragt, der von einem Abschnitt des Kupplungseingangsteils 24 mit einem U-förmigen Querschnitt gebildet wird. Der U-förmige Querschnitt des Aufnahmeraums 62 umfasst eine radial angeordnete Basis 64, von der sich zwei Schenkel 66 und 67 in axialer Richtung erstrecken.

Zwischen dem Kupplungseingangsteil 24 und dem Kupplungsdeckel 55 ist ein Dünnringkugellager 70 angeordnet, das sich sowohl in radialer als auch in axialer Richtung an dem Ende 60 des Kupplungsdeckels 55 einerseits und an der Basis 64 und dem Schenkel 66 des Kupplungseingangsteils 24 andererseits abstützt. Das Dünnringkugellager 70 weist eine gegenüber der radialen Richtung verkippte Berührungsnormale auf.

Radial innerhalb und axial überlappend zu dem Dünnringkugellager 70 ist ein Radialwellendichtring 72 zwischen dem Ende 60 des Kupplungsdeckels 55 und dem Kupplungseingangsteil 24 angeordnet. Das Dünnringkugellager 70 ist vollständig in dem Nassraum 56 angeordnet, der durch den Radialwellendichtring 72 von dem Trockenraum 57 getrennt ist. Das Dünnringkugellager 70 kann sowohl auf den Kupplungsdeckel 55 als auch auf das Kupplungseingangsteil 24 vormontiert werden. Das jeweils andere Teil kann bei der Montage über den entsprechenden Lagerring gleiten. Im Bereich der Lagereinrichtung sind keine zusätzlichen axialen Sicherungsringe notwendig. Eine Verschiebung der Teile zu dem Getriebe 5 wird durch in Reihe geschaltete Anschläge 73 und 74 an den Nabenteilen 30 und 41 sowie einen Sicherungsring 71 an der zweiten Getriebeeingangswelle 42 begrenzt. Die in den Figuren 1 bis 4 dargestellten Lösungen sind auch für Einfachkupplungen anwendbar.

Jede Reibungskupplung 27, 38 verfügt über antriebsseitige und abtriebsseitige Reibeinheiten 78, 79, die mittels einer axialen Verpressung entlang einer Rotationsachse 80 zumindest einer der Getriebeeingangswellen 31, 42 miteinander zur Bildung eines Reibeingriffs beaufschlagbar sind. Die Reibeinheiten 78, 79 der beiden Reibungskupplungen 27, 38 sind radial übereinander angeordnet. Die Reibeinheiten 78, 79 sind aus einer Mehrzahl schichtweise in axialer Richtung antriebsseitig und abtriebsseitig abwechselnder Reibpartner gebildet.

Zur Kühlung zumindest einer Reibungskupplung 27, 38 wird mittels einer Pumpe 81 ein Kühlmittelstrom bereitgestellt. Die Pumpe 81 ist im Bereich einer zwischen einer Wandung der Brennkraftmaschine 3 und einer Wandung des Doppelkupplungsgetriebes 5 gebildeten Kupplungsglocke 83 angeordnet. Die Pumpe 81 ist an einen Getriebegehäuseabschnitt 82 angebaut. Die Pumpe 81 wird vorzugsweise ausschließlich für die Bereitstellung des Kühlmittelstroms und zur Schmierung verwendet. Bei der Pumpe 81 handelt es sich um eine Innenzahnradpumpe, insbesondere eine Gerotorpumpe, die über die Kurbelwelle 4 angetrieben wird.

Die Pumpe 81 umfasst ein Hohlrad 84 mit einer Innenverzahnung 85, in die eine Außenverzahnung 88 eines Zahnrades 87 eingreift. Jede nach Pumpenbauart kann zum Ansaugen des Kühlmittels eine Saugsichel vorgesehen sein.

Dadurch dass die Pumpe nur das Öl für Schmierung und Kühlung umfördert, ist der erforderliche Maximaldruck sehr gering. Dies bedeutet, dass die mechanische Beanspruchung der Bauteile gering ist. Dadurch ist es möglich, den Pumpendeckel 94, die Pumpenzahnräder 81,87 und eventuell auch die Antriebzahnräder 96/98 aus Kunststoff, vorzugsweise einem duroplastischen Material zu fertigen. Dies ist im Vergleich zu Sintermaterial und der hier erforderlichen mechanischen Nachbearbeitung kostengünstiger, da bei den Kunststoffteilen, die mechanische Nachbearbeitung größtenteils entfallen kann. Auch das Gehäuse um das Saugregelventil und der Ventilkolben des Saugregelventils können aus Kunststoff sein, wenn es ich konstruktiv anbietet, das Saugregelventil in den Pumpendeckel zu integrieren oder in ein separates Teil zu legen, bei dem keine Lagerkräfte der Getriebewellen abgestützt werden müssen.

Das Sonnenrad 87 weist einen zentralen Lagerstummel 90 auf, und ist mit einer zentralen Durchgangsbohrung versehen, die in axialer Richtung verläuft. Der Lagerstummel 90 ist in einer kreisrunden Aussparung in dem Getriebegehäuseabschnitt 82 drehbar aufgenommen. Der Lagerstummel 90 ist bewusst kurz ausgeführt und dient nur der radialen Abstützung der im Betrieb der Pumpe 81 auftretenden, geringen Radialkräfte. Die Führung des Sonnenrads 87 erfolgt durch die Anordnung desselben zwischen zwei planparallelen Flächen 91, 92 an dem Getriebegehäuseabschnitt 82 und einem Pumpendeckel 94, der an den Getriebegehäuseabschnitt 82 angeschraubt ist. Die Kürze des Lagerstummels 90 ist notwendig, um die Teile nicht statisch überzubestimmen. 98 in Eingriff, das, ebenso wie das Pumpenzahnrad 96, mit einer Schrägverzahnung ausgestattet ist. Die Schrägverzahnung ist aus akustischen Gründen vorzuziehen. Ansonsten könnte auch eine gerade Verzahnung verwendet werden. Es ist auch möglich, das Pumpenzahnrad 96 einstückig mit dem Hohlrad 84 auszubilden. Bei einer einstückigen Verbindung des Hohlrads 84 der Pumpe 81 mit dem Pumpenzahnrad 96 entstehen jedoch Axialkräfte, die das Hohlrad 84 immer gegen eine Pumpengehäusewandung drücken. Dies führt auf der einen Seite zu einem großen Leckagespalt und auf der anderen Seite zu einem kleinen Spalt. Dadurch verschlechtert sich der volumetrische Wirkungsgrad, da die Spalthöhe die Leckage in der dritten Potenzhöhe beeinflusst. Aufgrund des einseitigen Andrückens entsteht auch ein zusätzlicher Schleppverlust. Bei der erfindungsgemäßen, geteilten Ausführung von Hohlrad 84 und Pumpenzahnrad 96 können diese Nachteile vermieden werden. Die Drehmomentmitnahme erfolgt durch die zum Beispiel angesinterte Mitnehmernase 95. die sowohl an dem Hohlrad 84 als auch an dem Pumpenzahnrad 96 ausgebildet sein kann, oder durch ein zusätzliches Einlegeteil.

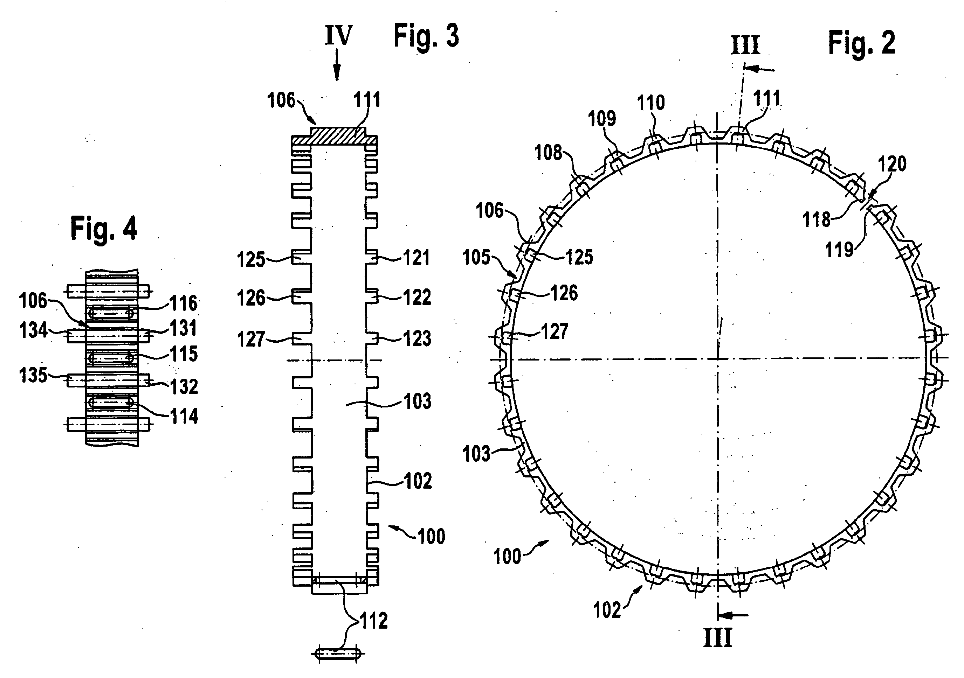

In den Figuren 2 bis 4 ist ein Kopplungsteil 100 in verschiedenen Ansichten dargestellt. Das Kopplungsteil 100 weist die Gestalt eines Kopplungsringes 102 auf, der aus einem umgeformten Blechstreifen 103 gebildet ist. Der Kopplungsring 102 weist einen Formschlussbereich 105 mit einer Außenverzahnung 106 auf. Die Außenverzahnung 106 umfasst eine Vielzahl von Zähnen 108 bis 111, die gleichmäßig über den Umfang des Kopplungsrings 102 verteilt sind.

In den Figuren 3 und 4 sieht man, dass zwischen zwei Zähnen der Außenverzahnung 106 jeweils ein Durchgangsloch 112, 114 bis 116 vorgesehen ist. Die Durchgangslöcher haben die Gestalt von Langlöchern, deren Längsachse in axialer Richtung angeordnet ist. Der Kopplungsring 102 ist nicht geschlossen, sondern offen ausgebildet. Die beiden Enden 118, 119 des Kopplungsrings 102 sind durch einen Freiraum 120 voneinander beabstandet.

Von den Stirnseiten des Befestigungsrings 102 erstrecken sich Befestigungsfinger 121 bis 123 und 125 bis 127; 131, 132; 134, 135 in axialer Richtung. Der Begriff axial bezieht sich im Rahmen der vorliegenden Erfindung auf die Rotationsachse der Lamellenkupplungseinrichtung. Den Zähnen der Außenverzahnung 106 sind Befestigungsfinger zugeordnet, die sich in entgegen gesetzten Richtungen erstrecken.

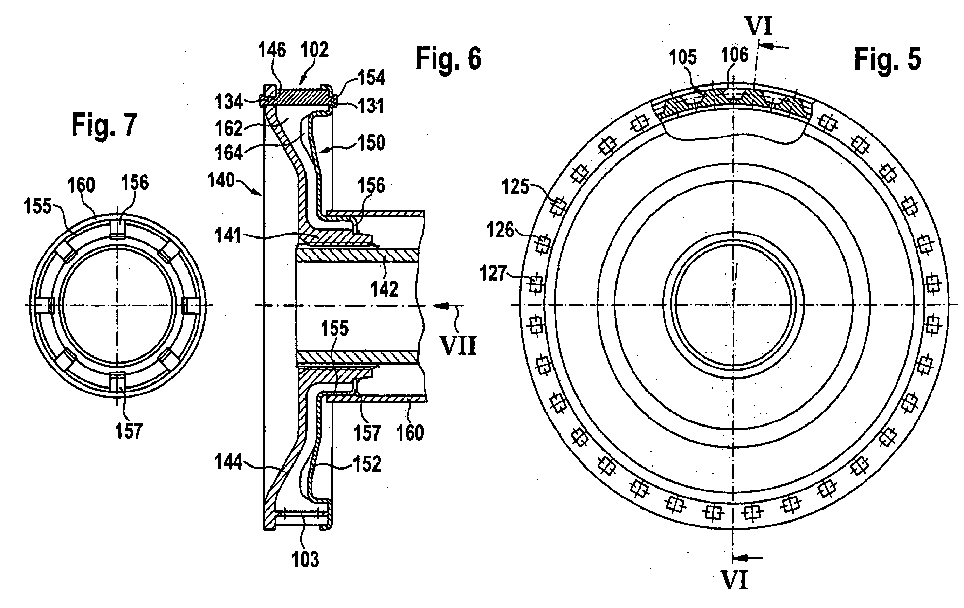

In den Figuren 5 bis 7 ist ein Innenlamellenträger 140 mit einem Kopplungsring 102, wie er in den Figuren 2 bis 4 dargestellt ist, in verschiedenen Ansichten dargestellt. Der Innenlamellenträger 140 umfasst ein Nabenteil 141 mit einer Innenverzahnung, in die eine Außenverzahnung einer Getriebeeingangswelle 142 eingreift. Von dem Nabenteil 141 erstreckt sich ein Flanschelement 144 radial nach außen. Das Flanschelement 144 ist einstückig mit dem Nabenteil 141 verbunden. Im Bereich seines radial äußeren Umfangsrands ist das Flanschelement 144 mit einer Vielzahl von Durchgangslöchern 146 ausgestattet. Die Durchgangslöcher, von denen in Figur 6 nur eines mit dem Bezugszeichen 146 versehen ist, sind gleichmäßig über den Umfang des Flanschelements verteilt. Durch die Durchgangslöcher erstreckt sich jeweils ein Befestigungsfinger. In Figur 6 ist ein Befestigungsfinger 134 im Schnitt dargestellt, der sich durch das Durchgangsloch 146 hindurch erstreckt. An dem freien Ende des Befestigungsfingers 134 ist ein Nutkopf ausgebildet, der dazu dient, das Flanschelement 144 mit dem Kopplungsring 102 zu vernieten.

An der anderen Stirnseite des Kopplungsrings 102 ist ein Wandelement 150 befestigt. Das Wandelement 150 hat im Wesentlichen die Gestalt einer verformten Kreisringscheibe 152, die sich zwischen dem Nabenteil 141 und dem Kopplungsring 102 erstreckt. Im Bereich seines radial äußeren Umfangsrands weist das Wandelement 150, wie das Flanschelement 144, eine Vielzahl von Durchgangslöchern auf, die gleichmäßig über den Umfang des Wandelements 150 verteilt sind. In Figur 6 ist ein Durchgangsloch 154 im Schnitt dargestellt, durch das sich der Befestigungsfinger 131 hindurch erstreckt. Das freie Ende des Befestigungsfingers 131 ist zu einem Nietkopf verformt, um das Wandelement 150 nietartig an dem Kopplungsring 102 zu befestigen.

Radial innen weist das Wandelement 150 eine Stufe 155 auf. Von der Stufe 155 sind radial nach innen Klauen 156, 157 abgewinkelt. Die Klauen 156, 157 sind mit dem Nabenteil 141 verstemmt. Die Stufe 155 bildet einen Lagersitz für ein Kühlmediumsleitblech 160, das im Wesentlichen die Gestalt einer sich in axialer Richtung sich erstreckenden Hülse aufweist. Das Nabenteil 141 und der Kopplungsring 102 in radialer Richtung sowie das Flanschelement 144 und das Wandelement 150 in axialer Richtung begrenzen einen ringraumförmigen Durchtrittsraum 162 für Kühlmedium. Das Kühlmedium kann radial zwischen dem Kühlmediumsleitblech 160 und der Getriebeeingangswelle 142 im Bereich der Klauen 156, 157 in den Durchtrittsraum 162 eintreten. Von dem Wandelement 150 ragen radial verlaufende Rippen 164 in den Durchtrittsraum 162 für das Kühlmedium. Die Rippen 164, von denen in der in Figur 6 gezeigten Schnittansicht nur eine zu sehen ist, bilden einen radial innen und außen geöffneten Kanal. Durch die Rippen wird die Rotation des Kühlmediums und damit die Entstehung des Fliehkraftdrucks in dem Durchtrittsraum 162 unterstützt. Durch die Durchgangslöcher 112, 114 bis 116 (in den Figuren 3 und 4) tritt das Kühlmedium aus dem Durchtrittsraum 162 aus und gelangt zu den zu kühlenden Lamellen.

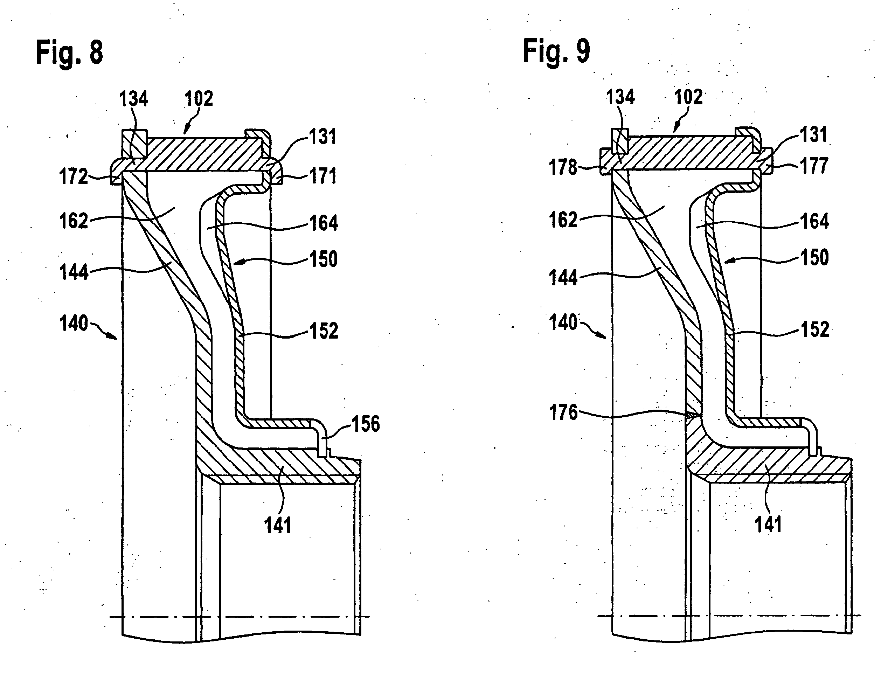

In Figur 8 ist gezeigt, dass die Befestigungsfinger 131, 134, die von dem Kopplungsring 102 ausgehen, an ihren Enden 171, 172 umgebogen sein können, um das Flanschelement 144 beziehungsweise das Wandelement 150 an dem Kopplungsring 102 zu befestigen.

In Figur 9 ist dargestellt, dass das Flanschelement 144 auch von einem separaten Bauteil gebildet sein kann. In Figur 9 ist das Flanschelement 144 durch eine Schweißnaht 176 stoffschlüssig mit dem separaten Nabenteil 141 verbunden. Die freien Enden 177, 178 der Befestigungsfinger 131, 134 sind nietkopfartig verformt, um das Flanschelement 144 beziehungsweise das Wandelement 150 nietartig an dem Kopplungsring 102 zu befestigen.

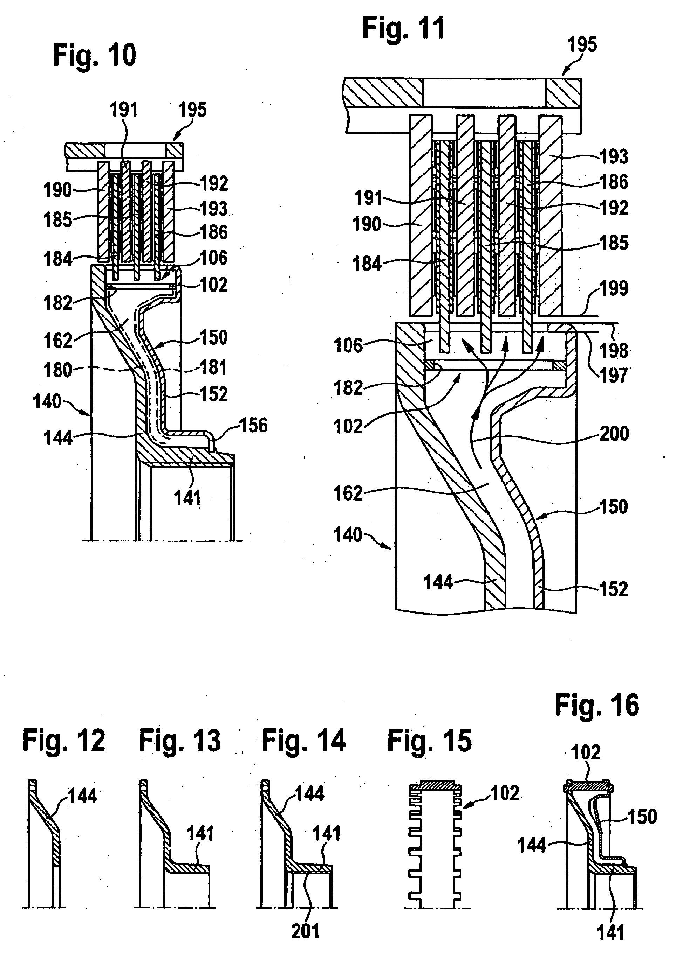

In Figur 10 ist durch gestrichelte Linien 180, 181 angedeutet, dass die projizierten Seitenflächen des Durchtrittsraums 162 für das Kühlmedium nahezu gleich groß sind. Dadurch wird erreicht, dass der Innenlamellenträger 140 aufgrund des Fliehkraftdrucks des Kühlmediums und/oder des Aktivdrucks einer Pumpe eine geringe Axialkraft auf die umgebenden Bauteile ausübt. Durch eine Vielzahl von Durchgangslöchern, von denen in Figur 10 nur ein Durchgangsloch 182 sichtbar ist, gelangt das Kühlmedium aus dem Durchtrittsraum 162 zu Innenlamellen 184, 186, die radial außen an dem Kopplungsring 102 angebracht sind. Die Innenlamellen 184 bis 186 weisen jeweils eine Innenverzahnung auf, die sich mit der Außenverzahnung 106 des Kopplungsrings 102 in Eingriff befinden. Die Innenlamellen 184 bis 186 sind mit Reibbelägen ausgestattet, um Reibeinheiten zu bilden, die mit Außenlamellen 190 bis 193 in Reibeingriff bringbar sind. Die Außenlamellen 190 bis 193 sind radial außen drehfest mit einem Außenlamellenträger 195 verbunden.

In Figur 11 ist ein Ausschnitt aus Figur 10 vergrößert dargestellt. In der vergrößerten Darstellung ist der Zahnkopfdurchmesser der Außenverzahnung 106 des Kopplungsrings 102 mit 197 bezeichnet. Die Außendurchmesser des Flanschelements 144 und des Wandelements 150 sind gleich groß und mit 198 bezeichnet. Der Innendurchmesser der Außenlamellen 190 bis 193 ist mit 199 bezeichnet. Der Außendurchmesser 198 des Flanschelements 144 und des Wandelements 150 ist gleich groß oder größer als der Zahnkopfdurchmesser 197. Das Wandelement 150 umgreift radial außen die Verzahnung 106 über den gesamten Umfang. Dadurch wird der seitliche Abfluss von Kühlmedium 200 durch die Zahnlücken vermieden. Die Verzahnung 106 ist an beiden Stirnseiten nahezu flüssigkeitsdicht abgeschlossen.

In den Figuren 12 bis 16 ist die Fertigungsreihenfolge des Innenlamellenträgers 140 dargestellt. In Figur 12 ist dargestellt, dass zunächst das Flanschelement 144 vorgeformt wird. In Figur 13 ist angedeutet, dass das Nabenteil 141 drückgewalzt wird. In Figur 14 ist angedeutet, dass eine innere Verzahnung 201 spanend an dem Nabenteil 141 hergestellt wird. In Figur 15 ist der Kopplungsring 102 allein dargestellt. In Figur 16 ist der Kopplungsring 102 mit dem daran vernieteten Flanschelement 144 und dem ebenfalls daran vernieteten Wandelement 150 dargestellt. Das Wandelement 150 ist radial innen mit dem Nabenteil 141 verstemmt.

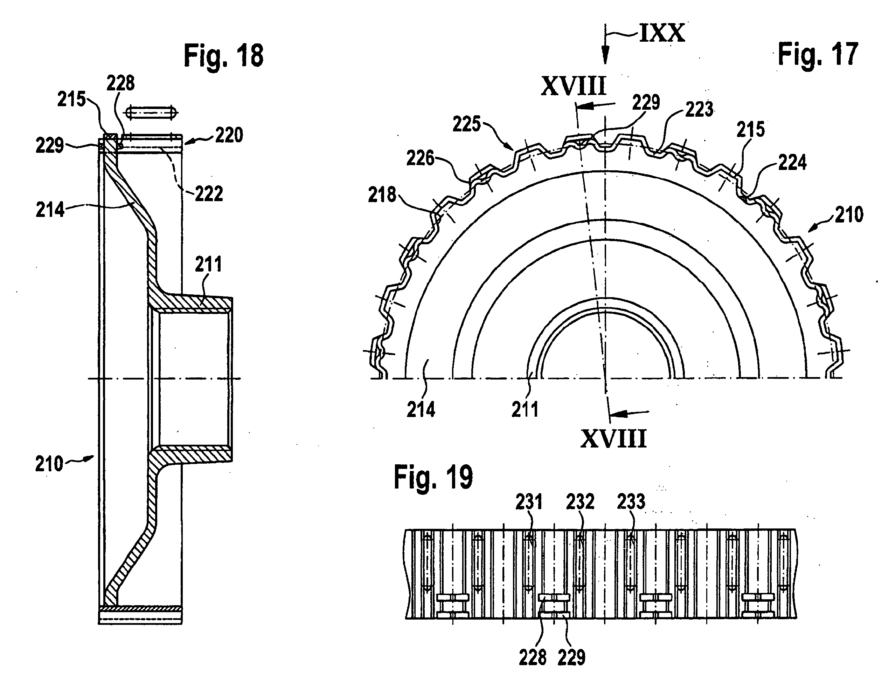

In den Figuren 17 bis 19 ist ein Innenlamellenträger 210 gemäß einem weiteren Ausführungsbeispiel in verschiedenen Ansichten dargestellt. Der Innenlamellenträger 210 umfasst ein Nabenteil 211, das einstückig mit einem Flanschelement 214 verbunden ist. Das Flanschelement 214 weist radial außen eine Außenverzahnung 215 auf. Die Außenverzahnung 215 befindet sich in Eingriff mit einer Innenverzahnung 218, die an einem Kopplungsteil 220 ausgebildet ist.

Das Kopplungsteil 220 umfasst einen Kopplungsring 222, der aus einem Blechstreifen 223 gebildet ist. Der Kopplungsring 222 ist an seinen Enden durch eine Schweißnaht 224 verbunden. Der Blechstreifen 223 hat im Ausgangszustand im Wesentlichen die Gestalt eines länglichen Rechtecks. Der geschlossene Kopplungsring 222 weist radial außen einen Formschlussbereich 225 mit einer Außenverzahnung 226 auf. Die Außenverzahnung 226 umfasst eine Vielzahl von Zähnen, die über den Umfang des Kopplungsteils 220 verteilt sind.

Im Eingriffsbereich mit der Außenverzahnung 215 des Flanschelements 214 ist die Innenverzahnung 218 des Kopplungsrings 222 an jedem zweiten Zahn jeweils durch zwei in axialer Richtung voneinander beabstandete Stege 228, 229 unterbrochen. Die Stege 228, 229 verlaufen in Umfangsrichtung des Kopplungsrings 222 und dienen dazu, die Außenverzahnung 215 des Flanschelements 214 in axialer Richtung relativ zu dem Kopplungsring 222 zu fixieren. Zwischen zwei Zähnen der Außenverzahnung 226 weist der Kopplungsring 222 jeweils ein Durchgangsloch 231 bis 233 auf. Die Durchgangslöcher 231 bis 233 haben die Gestalt von Langlöchern, die sich in axialer Richtung erstrecken.

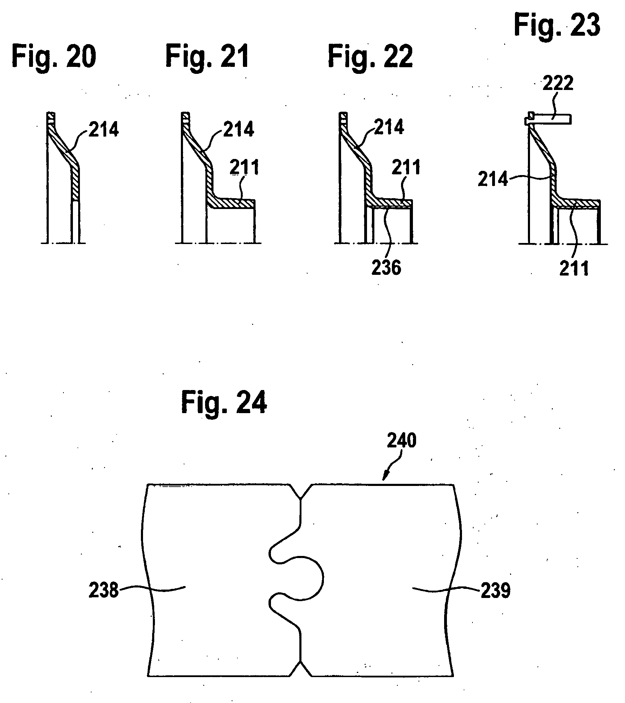

In den Figuren 20 bis 23 ist die Fertigungsreihenfolge des in den Figuren 17 bis 19 dargestellten Innenlamellenträgers 210 dargestellt. In Figur 20 ist das Flanschelement 214 nach dem Verformen der Außenverzahnung dargestellt. In Figur 21 ist das Flanschelement 214 nach dem Drückwalzen beziehungsweise Vergüten des Nabenteils 211 dargestellt. In Figur 22 ist das Flanschelement 214 mit dem Nabenteil 211 dargestellt, nachdem eine Innenverzahnung 236 spanend an dem Nabenteil 211 hergestellt wurde. In Figur 23 ist das Flanschelement 214 mit dem daran angerollten oder angeformten Kopplungsring 222 dargestellt.

In Figur 24 ist angedeutet, dass die Enden 238, 239 des den Kopplungsring bildenden Blechstreifens 240 auch durch eine geeignete Schlossgeometrie formschlüssig miteinander verbunden sein können.

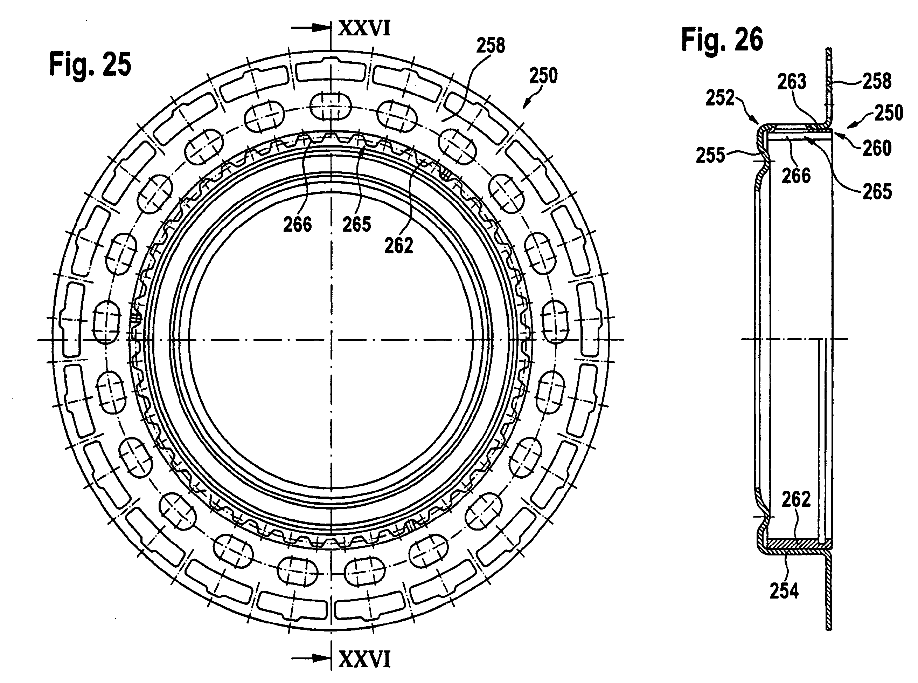

In den Figuren 25 und 26 ist ein Außenlamellenträger 250 in verschiedenen Ansichten dargestellt. Der Außenlamellenträger 250 umfasst einen Aufnahmetopf 252 mit einem hülsenförmigen Aufnahmeabschnitt 254. Der hülsenförmige Aufnahmeabschnitt 254 hat im Wesentlichen die Gestalt eines Kreiszylindermantels. Von einer Stirnseite des Aufnahmeabschnitts 254 erstreckt sich ein Flansch 255 radial nach innen. Von der anderen Stirnseite des Aufnahmeabschnitts 254 erstreckt sich ein Flansch 258 radial nach außen. In dem Aufnahmetopf 252 ist ein Kopplungsteil 260 fixiert. Das Kopplungsteil 260 umfasst einen Kopplungsring 262, der aus einem Blechstreifen 263 gebildet ist. Der Kopplungsring 262 weist radial innen einen Formschlussbereich 265 mit einer Innenverzahnung 266 auf. Der verzahnte, offene Kopplungsring 262 kann als innenverzahnter Kopplungsring mit einem glatten Außendurchmesser ausgeführt sein. Alternativ kann der Kopplungsring sowohl mit einer Innen- als auch mit einer Außenverzahnung ausgestattet sein.

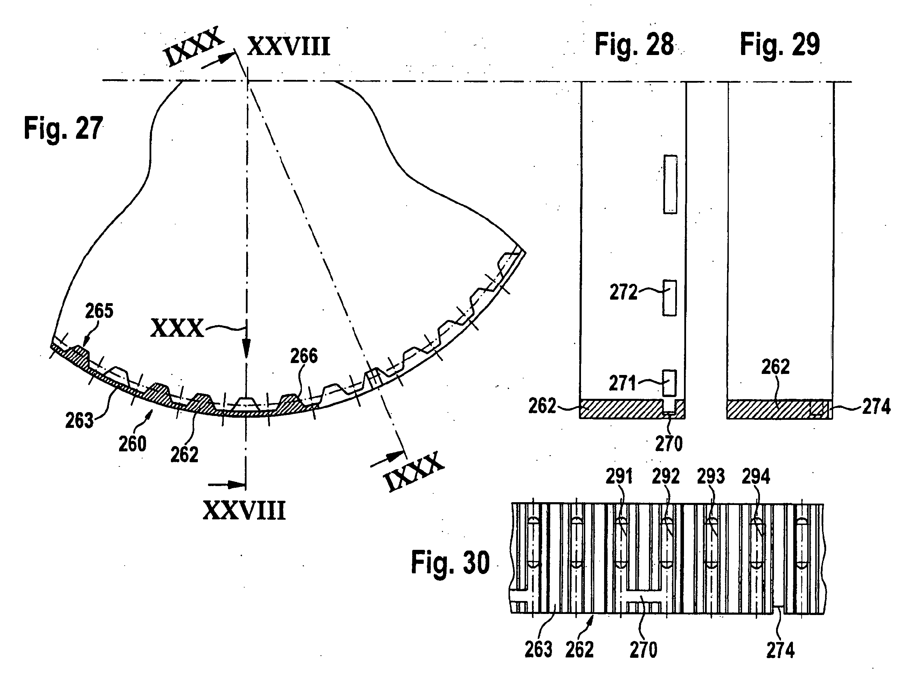

In Figur 27 ist ein Ausschnitt des Kopplungsrings 262 allein teilweise im Querschnitt dargestellt. In Figur 28 ist die Ansicht eines Schnitts entlang der Linie XXVIII-XXVIII in Figur 27 dargestellt. In der Schnittansicht sieht man, dass der Kopplungsring 262 mehrere in Umfangsrichtung verlaufende Nuten 270 bis 272 aufweist. Die umlaufenden Nuten beziehungsweise einzeln genutete Zähne dienen zur Abstützung einer (nicht dargestellten) Hebefeder. In Figur 29 ist die Ansicht eines Schnitts entlang der Linie IXXX-IXXX in Figur 27 dargestellt. In der Schnittansicht sieht man, dass der Kopplungsring 262 an einer Stirnseite radiale Aussparungen 274 aufweist. Die radialen Aussparungen 274 dienen zur Verdrehsicherung der Hebelfeder. In Figur 30 ist eine Abwicklung in der Blickrichtung XXX in Figur 27 des Kopplungsrings 262 dargestellt. In der Abwicklung sieht man, dass zwischen zwei Zähnen der Innenverzahnung jeweils ein Durchgangsloch 291 bis 294 in dem Blechstreifen 263 ausgespart ist. Die Durchgangslöcher 291 bis 294 haben die Gestalt von Langlöchern und ermöglichen den Durchtritt von Kühlmedium. Die Durchganglöcher werden vorzugsweise spanlos in den Blechstreifen 263 eingebracht.

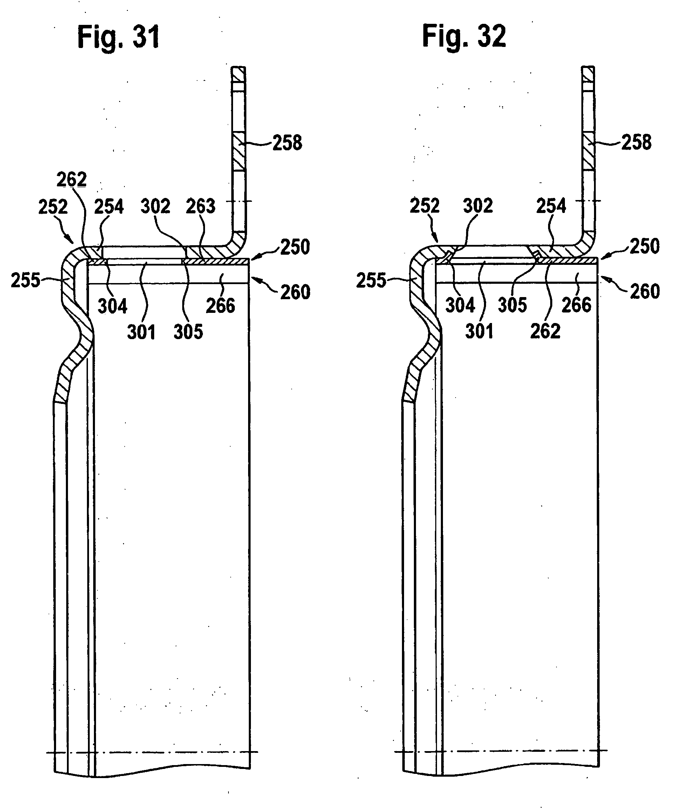

In Figur 31 ist ein vergrößerter Halbschnitt des Außenlamellenträgers 250 aus Figur 26 dargestellt. In Figur 31 sieht man, dass sowohl in dem Kopplungsring 262 als auch in dem Aufnahmeabschnitt 254 des Aufnahmetopfs 252 ein Langloch 301, 302 ausgespart ist. Das Langloch 301 in dem Kopplungsring 262 ist etwas kürzer als das Langloch 302 in dem Aufnahmeabschnitt 254. Die Überstände sind in Figur 31 mit 304 und 305 bezeichnet. In Figur 32 ist gezeigt, dass die Überstände 304, 305 des Langlochs 301 im Randbereich des Langlochs 302 mit dem Aufnahmeabschnitt 254 des Aufnahmetopfs 252 verstemmt sind.

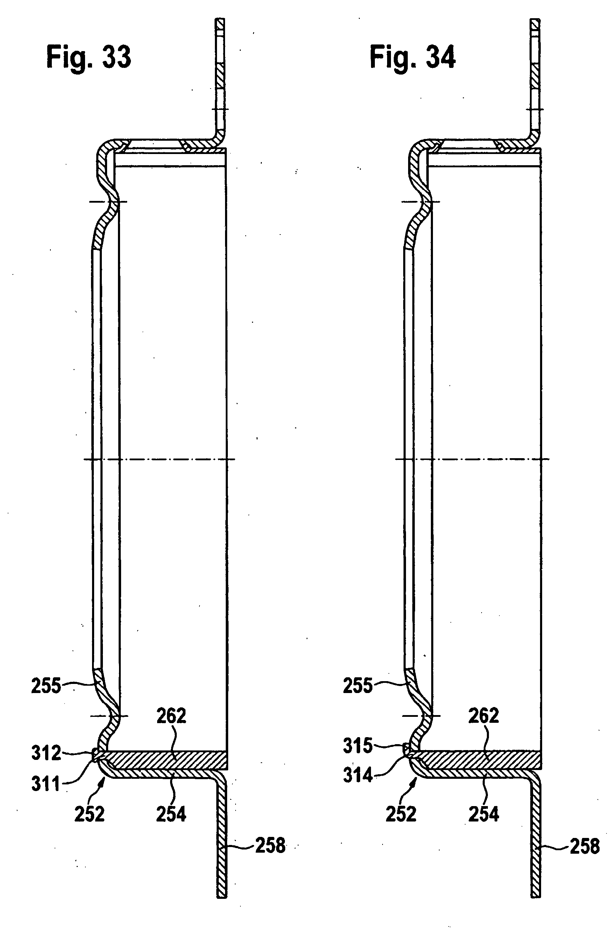

In Figur 33 ist dargestellt, dass an einer Stirnseite des Kopplungsrings 262 auch Befestigungsfinger 311 in axialer Richtung vorstehen können. Die Befestigungsfinger 311 erstrecken durch den Aufnahmetopf 252 hindurch und sind an ihrem freien Ende 312 nietkopfartig ausgebildet. Dadurch wird eine Vernietung des Aufnahmetopfs 252 an dem Kopplungsring 262 ermöglicht.

In Figur 34 ist dargestellt, dass von einer Stirnseite des Kopplungsrings 262 auch Befestigungsfinger 314 ausgehen können, die sich durch den Aufnahmetopf 252 hindurch erstrecken. Die Befestigungsfinger 314 sind an ihrem freien Ende 315 umgelegt, um den Aufnahmetopf 252 an dem Kopplungsring 262 zu fixieren, und umgekehrt.

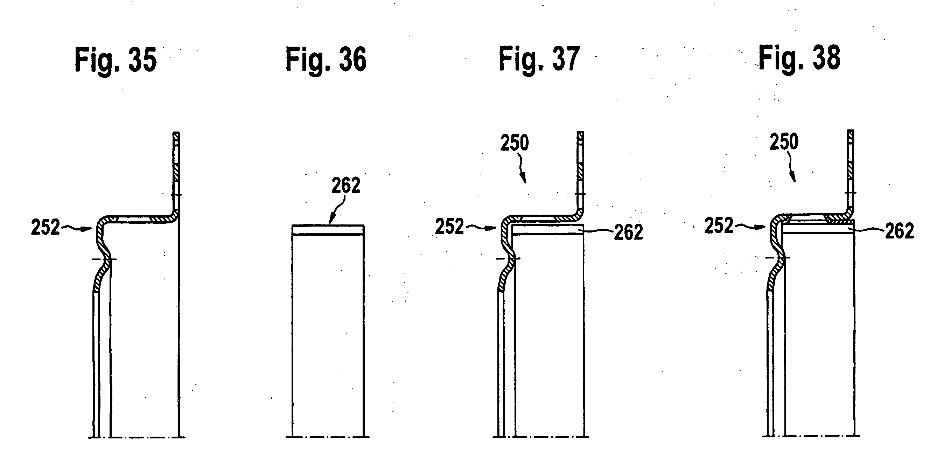

In den Figuren 35 bis 38 ist die Fertigungsreihenfolge des Außenlamellenträgers 250 dargestellt. In Figur 35 ist der Aufnahmetopf 252 allein im Halbschnitt dargestellt. In Figur 36 ist der Kopplungsring 262, der auch als Zahnring bezeichnet wird, allein im Halbschnitt dargestellt. In Figur 37 ist der Außenlamellenträger 250 im zusammengebauten Zustand vor dem Verstemmen des Kopplungsrings 262 mit dem Aufnahmetopf 252 dargestellt. In Figur 38 ist der Außenlamellenträger 250 nach dem Verstemmen des Kopplungsrings 262 in dem Aufnahmetopf 252 dargestellt.

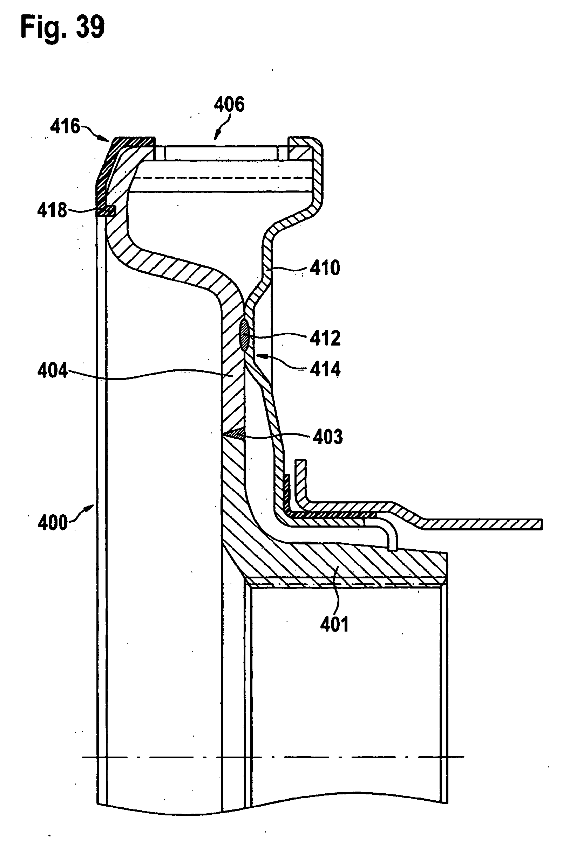

In Figur 39 ist ein Innenlamellenträger 400 mit einem Nabenteil 401 im Halbschnitt dargestellt. Das Nabenteil 401 ist über eine Schweißnaht 403 stoffschlüssig mit einem Flanschelement 404 verbunden. Das Flanschelement 404 weist radial außen einen gerollten Verzahnungsbereich 406 auf. Der gerollte Verzahnungsbereich 406 stellt ein Kopplungselement dar, das einstückig mit dem Flanschelement 404 verbunden ist.

An dem Flanschelement 404 ist ein Wandelement 410 mit Hilfe von mehreren lokalen Punktverschweißungen 412 befestigt. Alternativ kann das Wandelement 410 mit dem Flanschelement 404 vernietet sein. Ebenso kann das Nabenteil 401 mit dem Flanschelement 404 vernietet sein. Im Bereich der Punktverschweißungen 412 sind an dem Wandelement 410 Durchlässe 414 vorgesehen.

Der Zahnkopfdurchmesser des gerollten Verzahnungsbereichs 406 ist auf dem gesamten Umfang von einem hütchenartigen Abdeckelement 416 umschlossen. Das Abdeckelement 416 dient dazu, den seitlichen Abfluss in den Zahnlücken auf der Flanschseite zu verhindern. Das Abdeckelement 416 ist als Kunststoffteil ausgeführt und mit Hilfe mindestens einer Steckverbindung 418 an dem Flanschelement 404 befestigt.

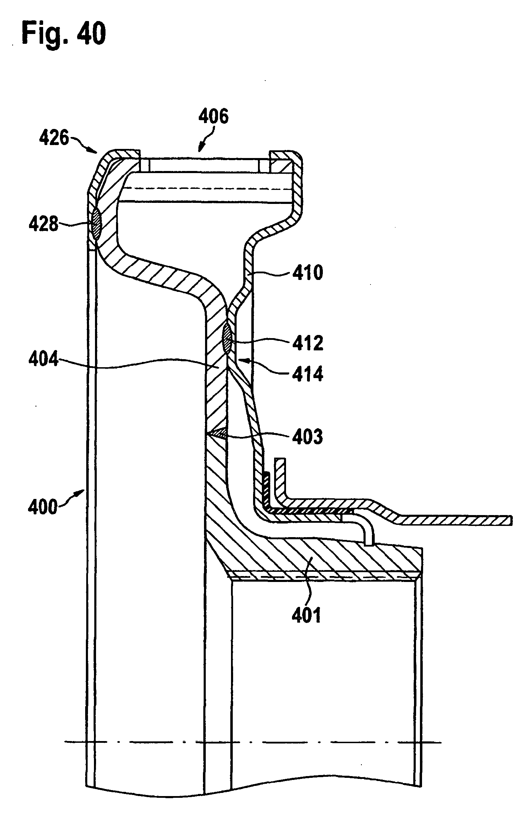

In Figur 40 ist ein ähnlicher Innenlamellenträger wie in Figur 39 dargestellt. Zur Bezeichnung gleicher Teile werden gleiche Bezugszeichen verwendet. Um Wiederholungen zu vermeiden, wird auf die vorangegangene Beschreibung der Figur 39 verwiesen. Im Folgenden wird nur auf die Unterschiede zwischen den beiden Ausführungsbeispielen eingegangen.

Bei dem in Figur 40 dargestellten Ausführungsbeispiel ist ein als Blechformteil ausgebildetes hütchenartiges Abdeckelement 426 mit Hilfe von Schweißverbindungsstellen 428 oder einer umlaufenden Schweißnaht an dem Flanschelement 404 befestigt. Alternativ kann das Abdeckteil 426 auch mit dem Flanschelement 404 vernietet sein.

### Bezugszeichenliste

- 1.: Antriebsstrang
- 3.: Antriebseinheit
- 4.: Kurbelwelle
- 5.: Getriebe
- 6.: Doppelkupplung
- 8.: Schwingungsdämpfungseinrichtung
- 9.: Schraubverbindung
- 10.: Eingangsteil von 8
- 11.: Anlasserzahnkranz
- 12.: Schwungmasse
- 14.: Schwingungsdämpferkäfig
- 16.: Federeinrichtung
- 18.: Ausgangsteil von 8
- 19.: Schwungmasse
- 21.: Verbindungsteil
- 24.: Kupplungseingangsteil
- 26.: Außenlamellenträger
- 27.: erste Lamellen-Kupplungsanordnung
- 28.: Innenlamellenträger
- 30.: Nabenteil
- 31.: erste Getriebeeingangswelle
- 34.: Verbindungsteil
- 36.: Außenlamellenträger
- 38.: zweite Lamellen-Kupplungsanordnung
- 40.: Innenlamellenträger
- 41.: Nabenteil
- 42.: zweite Getriebeeingangswelle
- 44.: Betätigungshebel
- 45.: Betätigungshebel
- 48.: Betätigungslager
- 49.: Betätigungslager
- 51.: Betätigungskolben
- 52.: Betätigungskolben
- 55.: Kupplungsdeckel
- 56.: Nassraum
- 57.: Aufnahmeraum, Trockenraum
- 58.: Getriebegehäuseabschnitt
- 60.: Ende
- 62.: Aufnahmeraum mit U-förmigem Querschnitt
- 64.: Basis
- 66.: Schenkel
- 67.: Schenkel
- 70.: Dünnringkugellager
- 71.: Sicherungsring
- 72.: Radialwellendichtring
- 73.: Anschlag
- 74.: Anschlag
- 78.: Reibeinheiten
- 79.: Reibeinheiten
- 80.: Rotationsachse
- 81.: Pumpe
- 82.: Getriebegehäuseabschnitt
- 83.: Kupplungsglocke
- 84.: Hohlrad
- 85.: Innenverzahnung
- 87.: Sonnenrad
- 88.: Außenverzahnung
- 90.: Lagerstummel
- 91.: planparallele Fläche
- 92.: planparallele Fläche
- 94.: Pumpendeckel
- 95.: Mitnehmernase
- 96.: Pumpenzahnrad
- 98.: Antriebszahnrad
- 100.: Kopplungsteil
- 102.: Kopplungsring
- 103.: Blechstreifen
- 105.: Formschlussbereich
- 106.: Außenverzahnung
- 108.: Zahn
- 109.: Zahn
- 110.: Zahn
- 111.: Zahn
- 112.: Durchgangloch
- 114.: Durchgangsloch
- 115.: Durchgangsloch
- 116.: Durchgangsloch
- 118.: Ende
- 119.: Ende
- 120.: Freiraum
- 121.: Befestigungsfinger
- 122.: Befestigungsfinger
- 123.: Befestigungsfinger
- 125.: Befestigungsfinger
- 126.: Befestigungsfinger
- 127.: Befestigungsfinger
- 131.: Befestigungsfinger
- 132.: Befestigungsfinger
- 134.: Befestigungsfinger
- 135.: Befestigungsfinger
- 140.: Innenlamellenträger
- 141.: Nabenteil
- 142.: Getriebeeingangswelle
- 144.: Flanschelement
- 146.: Durchgangsloch
- 150.: Wandelement
- 152.: Kreisringscheibe
- 154.: Durchgangsloch
- 155.: Stufe
- 156.: Klaue
- 157.: Klaue
- 160.: Kühlmediumsleitblech
- 162.: Durchtrittsraum
- 164.: Rippe
- 171.: Ende
- 172.: Ende
- 176.: Schweißnaht
- 177.: Ende
- 178.: Ende
- 180.: projizierte Seitenfläche
- 181.: projizierte Seitenfläche
- 182.: Durchgangsloch
- 184.: Innenlamellen
- 185.: Innenlamellen
- 186.: Innenlamellen
- 190.: Außenlamellen
- 191.: Außenlamellen
- 192.: Außenlamellen
- 193.: Außenlamellen
- 195.: Außenlamellenträger
- 197.: Zahnkopfdurchmesser
- 198.: Außendurchmesser
- 199.: Innendurchmesser
- 200.: Kühlmedium
- 201.: Innenverzahnung
- 210.: Innenlamellenträger
- 211.: Nabenteil
- 214.: Flanschelement
- 215.: Außenverzahnung
- 218.: Innenverzahnung
- 220.: Kopplungsteil
- 222.: Kopplungsring
- 223.: Blechstreifen
- 224.: Schweißnaht
- 225.: Formschlussbereich
- 226.: Außenverzahnung
- 228.: Steg
- 229.: Steg
- 231.: Durchgangsloch
- 232.: Durchgangsloch
- 233.: Durchgangsloch
- 236.: Innenverzahnung
- 238.: Ende
- 239.: Ende
- 240.: Blechstreifen
- 250.: Außenlamellenträger
- 252.: Aufnahmetopf
- 254.: Aufnahmeabschnitt
- 255.: Flansch
- 260.: Kopplungsteil
- 262.: Kopplungsring
- 263.: Blechstreifen
- 265.: Formschlussbereich
- 266.: Innenverzahnung
- 270.: Nut
- 271.: Nut
- 272.: Nut
- 274.: Aussparungen
- 291.: Durchgangsloch
- 292.: Durchgangsloch
- 293.: Durchgangsloch
- 294.: Durchgangsloch
- 301.: Langloch
- 302.: Langloch
- 304.: Überstand
- 305.: Überstand
- 311.: Befestigungsfinger
- 312.: vernietetes Ende
- 314.: Befestigungsfinger
- 315.: umgelegtes Ende
- 400.: Innenlamellenträger
- 401.: Nabenteil
- 403.: Schweißnaht
- 404.: Flanschelement
- 406.: Verzahnungsbereich
- 410.: Wandelement
- 412.: Punktschweißung
- 414.: Durchlass
- 416.: Abdeckung
- 418.: Steckverbindung
- 426.: Abdeckelement
- 428.: Schweißverbindungsstellen

## Patentansprüche

1. Lamellenkupplungseinrichtung mit mindestens einer Lamellenkupplung (27, 38), die einen Außenlamellenträger (26, 36, 250) für Außenlamellen und einen Innenlamellenträger (28, 40, 140, 210) für Innenlamellen umfasst, wobei Außenlamellen und Innenlamellen zur Übertragung eines Drehmoments in Reibeingriff miteinander bringbar sind, wobei der Innenlamellenträger (140, 210) ein Flanschelement (144, 214, 404) oder der Außenlamellenträger (250) einen Flansch (255) aufweist, **dadurch gekennzeichnet, dass** am Flanschelement bzw. am Flansch ein aus einem umgeformten Materialstreifen (103, 223, 263) gebildetes Kopplungsteil (100, 220, 260) befestigt ist, das einen Formschlussbereich (105, 225, 265) aufweist, der dazu dient, den jeweiligen Lamellenträger (140, 210, 250) drehfest mit den zugehörigen Lamellen (184-186) zu verbinden, und dass das Kopplungsteil (100, 220, 260) aus einem umgeformten Blechstreifen gebildet ist (103, 223, 263) und die Gestalt eines Kopplungsringes (102, 222, 262) aufweist.

2. Lamellenkupplungseinrichtung nach Anspruch 1, **dadurch gekennzeichnet, dass** der Kopplungsring (222, 262) an den Enden (238, 239) des Materialstreifens (240) geschlossen ist.

3. Lamellenkupplungseinrichtung nach Anspruch 1 oder 2, **dadurch gekennzeichnet, dass** der Kopplungsring (102, 222, 262) mehrere sich in radialer Richtung erstreckende Durchgangslöcher (114-116,231-233,291-294) aufweist.

4. Lamellenkupplungseinrichtung nach einem der Ansprüche 1 bis 3, **dadurch gekennzeichnet, dass** von mindestens einer Stirnseite des Kopplungsrings (102) Befestigungsfinger (121-123, 125-127, 131, 132, 134, 135) ausgehen.

5. Lamellenkupplungseinrichtung nach Anspruch 4, **dadurch gekennzeichnet, dass** die freien Enden (177, 178) der Befestigungsfinger (131, 134) nietkopfartig verformt sind, um ein Flanschelement (144) beziehungsweise ein Wandelement (150) nietartig mit dem Kopplungsring (102) zu verbinden.

6. Lamellenkupplungseinrichtung nach Anspruch 4, **dadurch gekennzeichnet, dass** die freien Enden (171, 172) der Befestigungsfinger (131, 134) umgebogen sind, um ein Flanschelement (144) beziehungsweise ein Wandelement (150) mit dem Kopplungsring (102) zu verbinden.

7. Lamellenkupplungseinrichtung nach Anspruch 4, **dadurch gekennzeichnet, dass** die Befestigungsfinger (125-127, 134, 135), die von der einen Stirnseite des Kopplungsrings (102) ausgehen, ein Flanschelement (144) durchgreifen, das von einem Nabenteil (141) ausgeht.

8. Lamellenkupplungseinrichtung nach einem der Ansprüche 5 bis 7, **dadurch gekennzeichnet, dass** das Nabenteil (141) aus einem Blechteil geformt ist.

9. Lamellenkupplungseinrichtung nach einem der Ansprüche 5 bis 8, **dadurch gekennzeichnet, dass** die Befestigungsfinger (121-123, 131, 132), die von der anderen Stirnseite des Kopplungsrings (102) ausgehen, ein Wandelement (150) durchgreifen.

10. Lamellenkupplungseinrichtung nach Anspruch 9, **dadurch gekennzeichnet, dass** radial innen von dem Wandelement (150) Klauen (156, 157) ausgehen, die in das Nabenteil (141) eingreifen.

11. Lamellenkupplungseinrichtung nach Anspruch 9 oder 10, **dadurch gekennzeichnet, dass** innen von dem Wandelement (150) Leitrippen (164) in axialer Richtung abstehen.

12. Lamellenkupplungseinrichtung nach einem der Ansprüche 5 bis 11, **dadurch gekennzeichnet, dass** die Seitenflächen eines in axialer Richtung von dem Wandelement (150) und dem Flanschelement (144) begrenzten Kühlmediumsdurchtrittsraums (162) geschlossen sind.

13. Lamellenkupplungseinrichtung nach Anspruch 12, **dadurch gekennzeichnet, dass** die projizierten Seitenflächen (180, 181) des in axialer Richtung von dem Wandelement (150) und dem Flanschelement (144) begrenzten Kühlmediumsdurchtrittsraums (162) nahezu gleich groß sind.

14. Lamellenkupplungseinrichtung nach einem der Ansprüche 7 bis 10, **dadurch gekennzeichnet, dass** das Wandelement (150) radial innen, im Querschnitt betrachtet, eine Stufe (155), die als Lagersitz dient, aufweist.

15. Lamellenkupplungseinrichtung nach einem der Ansprüche 5 bis 14, **dadurch gekennzeichnet, dass** der Kopplungsring (102) eine Außenverzahnung (106) aufweist.

16. Lamellenkupplungseinrichtung nach Anspruch 15, **dadurch gekennzeichnet, dass** die Außenverzahnung (106) stirnseitig nahezu flüssigkeitsdicht abgeschlossen ist.

17. Lamellenkupplungseinrichtung nach Anspruch 15 oder 16, **dadurch gekennzeichnet, dass** die Außenverzahnung (106) des Kopplungsrings (102) einen Zahnkopfdurchmesser (197) aufweist, der kleiner als oder gleich groß wie der Außendurchmesser (198) des Flanschelements (144) ist.

18. Lamellenkupplungseinrichtung nach einem der Ansprüche 15 bis 17, **dadurch gekennzeichnet, dass** die Außenverzahnung (106) des Kopplungsrings (102) einen Zahnkopfdurchmesser (197) aufweist, der kleiner als oder gleich groß wie der Außendurchmesser (198) des Wandelements (150) ist.

19. Lamellenkupplungseinrichtung nach Anspruch 18, **dadurch gekennzeichnet, dass** das Wandelement (150) den Kopplungsring (102) radial außen umgreift.

20. Lamellenkupplungseinrichtung nach einem der Ansprüche 1 bis 3, **dadurch gekennzeichnet, dass** der Kopplungsring (222) eine Innenverzahnung (218) aufweist, die sich mit einer komplementären Außenverzahnung (215) in Eingriff befindet, die an einem Flanschelement (214) ausgebildet ist, das von einem Nabenteil (211) ausgeht.

21. Lamellenkupplungseinrichtung nach Anspruch 20, **dadurch gekennzeichnet, dass** das Nabenteil (211) aus einem Blechteil gebildet ist.

22. Lamellenkupplungseinrichtung nach Anspruch 20 oder 21, **dadurch gekennzeichnet, dass** der Kopplungsring (222) im Eingriffsbereich mit dem Flanschelement (214) in Umfangsrichtung verlaufende, in axialer Richtung paarweise gegenüberliegende Stege (228, 229) aufweist, zwischen denen das Flanschelement (214) in axialer Richtung fixiert ist.

23. Lamellenkupplungseinrichtung nach einem der Ansprüche 1 bis 3, **dadurch gekennzeichnet, dass** der Kopplungsring (262) eine Innenverzahnung (266) aufweist.

24. Lamellenkupplungseinrichtung nach Anspruch 23, **dadurch gekennzeichnet, dass** der Außenlamellenträger (250) einen Aufnahmetopf (252) aufweist, in dem der Kopptungsring (262) aufgenommen ist.

25. Lamellenkupplungseinrichtung nach Anspruch 23 oder 24, **dadurch gekennzeichnet, dass** der Aufnahmetopf (262) einen hülsenförmigen Aufnahmeabschnitt (254) aufweist.

26. Lamellenkupplungseinrichtung nach Anspruch 25, **dadurch gekennzeichnet, dass** der Aufnahmeabschnitt (254) in einem axialen Randbereich in Umfangsrichtung verlaufende Nuten (270, 271) aufweist.

27. Lamellenkupplungseinrichtung nach Anspruch 25 oder 26, **dadurch gekennzeichnet, dass** der Aufnahmeabschnitt (254) in einem axialen Randbereich radiale Aussparungen (274) aufweist.

28. Lamellenkupplungseinrichtung nach einem der Ansprüche 21 bis 23, **dadurch gekennzeichnet, dass** der Aufnahmeabschnitt (254) Langlöcher (302) aufweist, die länger als Langlöcher (301) sind, die in dem Kopplungsring (262) ausgespart sind.

29. Lamellenkupplungseinrichtung nach Anspruch 24, **dadurch gekennzeichnet, dass** der in die Langlöcher (302) des Aufnahmeabschnitts (254) überstehende Überstand (304,305) der Langlöcher (301) des Kopplungsrings (262) mit dem Randbereich der Langlöcher (302) des Aufnahmeabschnitts (254) verstemmt ist.

30. Lamellenkupplungseinrichtung nach einem der Ansprüche 21 bis 25, **dadurch gekennzeichnet, dass** sich von einer Stirnseite des Aufnahmeabschnitts (254) ein Flansch (255) radial nach innen erstreckt.

31. Lamellenkupplungseinrichtung nach Anspruch 26, **dadurch gekennzeichnet, dass** von mindestens einer Stirnseite des Kopplungsrings (262) Befestigungsfinger (311, 314) ausgehen, die den Flansch (255) durchgreifen.

32. Lamellenkupplungseinrichtung nach einem der vorhergehenden Ansprüche, **dadurch gekennzeichnet, dass** die freien Enden (312) der Befestigungsfinger (311) nietkopfartig verformt sind, um den Aufnahmetopf (252) mit dem Kopplungsring (262) nietartig zu verbinden.

33. Lamellenkupplungseinrichtung nach einem der vorhergehenden Ansprüche, **dadurch gekennzeichnet, dass** die freien Enden (315) der Befestigungsfinger (314) umgebogen sind, um den Aufnahmetopf (252) an dem Kopplungsring (262) zu befestigen.

34. Lamellenkupplungseinrichtung nach einem der vorhergehenden Ansprüche, **dadurch gekennzeichnet, dass** die Oberfläche des Kopplungsteiles (100, 220, 260) zur Erhöhung der Verschleißbeständigkeit beschichtet ist.

35. Drehmomentübertragungseinrichtung im Antriebsstrang (1) eines Kraftfahrzeugs zur Übertragung von Drehmoment zwischen einer Brennkraftmaschine (3) mit einer Kurbelwelle (4) und einem Getriebe mit zumindest einer Getriebeeingangswelle (31, 42), die mittels einer Lamellenkupplungseinrichtung (27,38) nach einem der vorhergehenden Ansprüche mit der Kurbelwelle (4) koppelbar ist.

## Claims

1. Multiplate clutch device having at least one multiplate clutch (27, 38) which comprises an outer plate carrier (26, 36, 250) for outer plates and an inner plate carrier (28, 40, 140, 210) for inner plates, wherein outer plates and inner plates can be placed in frictional engagement with one another for the purpose of transmitting a torque, wherein the inner plate carrier (140, 210) has a flange element (144, 214, 404) or the outer plate carrier (250) has a flange (255), **characterized in that**, to the flange element or to the flange, there is fastened a coupling part (100, 220, 260) which is formed from a deformed material strip (103, 223, 263) and which has a positive-locking region (105, 225, 265) which serves for connecting the respective plate carrier (140, 210, 250) rotationally conjointly to the associated plates (184-186), and **in that** the coupling part (100, 220, 260) is formed from a deformed sheet-metal strip (103, 223, 263) and is in the form of a coupling ring (102, 222, 262).

2. Multiplate clutch device according to Claim 1, **characterized in that** the coupling ring (222, 262) is closed at the ends (238, 239) of the material strip (240).

3. Multiplate clutch device according to Claim 1 or 2, **characterized in that** the coupling ring (102, 222, 262) has multiple passage holes (114-116, 231-233, 291-294) extending in a radial direction.

4. Multiplate clutch device according to one of Claims 1 to 3, **characterized in that** fastening fingers (121-123, 125-127, 131, 132, 134, 135) extend from at least one face side of the coupling ring (102).

5. Multiplate clutch device according to Claim 4, **characterized in that** the free ends (177, 178) of the fastening fingers (131, 134) are deformed in the manner of rivet heads in order, in the manner of rivets, to connect a flange element (144) and a wall element (150), respectively, to the coupling ring (102).

6. Multiplate clutch device according to Claim 4, **characterized in that** the free ends (171, 172) of the fastening fingers (131, 134) are bent in order to connect a flange element (144) and a wall element (150), respectively, to the coupling ring (102).

7. Multiplate clutch device according to Claim 4, **characterized in that** the fastening fingers (125-127, 134, 135) that extend from one face side of the coupling ring (102) engage through a flange element (144) that extends from a hub part (141).

8. Multiplate clutch device according to one of Claims 5 to 7, **characterized in that** the hub part (141) is formed from a sheet-metal part.

9. Multiplate clutch device according to one of Claims 5 to 8, **characterized in that** the fastening fingers (121-123, 131, 132) that extend from the other face side of the coupling ring (102) engage through a wall element (150).

10. Multiplate clutch device according to Claim 9, **characterized in that** claws (156, 157) extend radially inward from the wall element (150), which claws engage into the hub part (141).

11. Multiplate clutch device according to Claim 9 or 10, **characterized in that** guide ribs (164) project axially from the wall element (150) at the inside.

12. Multiplate clutch device according to one of Claims 5 to 11, **characterized in that** the side surfaces of a cooling medium passage chamber (162), which is delimited in the axial direction by the wall element (150) and by the flange element (144), are closed.

13. Multiplate clutch device according to Claim 12, **characterized in that** the projected side surfaces (180, 181) of the cooling medium passage chamber (162), which is delimited in the axial direction by the wall element (150) and by the flange element (144), are of approximately equal size.

14. Multiplate clutch device according to one of Claims 7 to 10, **characterized in that** the wall element (150) has, radially at the inside and viewed in cross section, a step (155) that serves as a bearing seat.

15. Multiplate clutch device according to one of Claims 5 to 14, **characterized in that** the coupling ring (102) has an external toothing (106).

16. Multiplate clutch device according to Claim 15, **characterized in that** the external toothing (106) is closed off in approximately liquid-tight fashion at the face sides.

17. Multiplate clutch device according to Claim 15 or 16, **characterized in that** the external toothing (106) of the coupling ring (102) has a tooth tip diameter (197) which is smaller than or equal to the outer diameter (198) of the flange element (144).

18. Multiplate clutch device according to one of Claims 15 to 17, **characterized in that** the external toothing (106) of the coupling ring (102) has a tooth tip diameter (197) which is smaller than or equal to the outer diameter (198) of the wall element (150).

19. Multiplate clutch device according to Claim 18, **characterized in that** the wall element (150) engages around the coupling ring (102) radially at the outside.

20. Multiplate clutch device according to one of Claims 1 to 3, **characterized in that** the coupling ring (222) has an internal toothing (218) that meshes with a complementary external toothing (215) formed on a flange element (214) that extends from a hub part (211).

21. Multiplate clutch device according to Claim 20, **characterized in that** the hub part (211) is formed from a sheet-metal part.

22. Multiplate clutch device according to Claim 20 or 21, **characterized in that** the coupling ring (222) has, in the region of engagement with the flange element (214), webs (228, 229) which run in the circumferential direction and which are situated opposite one another in pairs in the axial direction and between which the flange element (214) is fixed in the axial direction.

23. Multiplate clutch device according to one of Claims 1 to 3, **characterized in that** the coupling ring (262) has an internal toothing (266).

24. Multiplate clutch device according to Claim 23, **characterized in that** the outer plate carrier (250) has a receiving pot (252) in which the coupling ring (262) is received.

25. Multiplate clutch device according to Claim 23 or 24, **characterized in that** the receiving pot (252) has a sleeve-shaped receiving section (254).

26. Multiplate clutch device according to Claim 25, **characterized in that** the receiving section (254) has, in an axial edge region, grooves (270, 271) which run in the circumferential direction.

27. Multiplate clutch device according to Claim 25 or 26, **characterized in that** the receiving section (254) has radial cutouts (274) in an axial edge region.

28. Multiplate clutch device according to one of Claims 21 to 23, **characterized in that** the receiving section (254) has slots (302) that are longer than slots (301) cut out of the coupling ring (262).

29. Multiplate clutch device according to Claim 24, **characterized in that** the projecting length (304, 305), protruding into the slots (302) in the receiving section (254), of the slots (301) in the coupling ring (262) is caulked with the edge region of the slots (302) of the receiving section (254).

30. Multiplate clutch device according to one of Claims 21 to 25, **characterized in that** a flange (255) extends radially inward from one face side of the receiving section (254).

31. Multiplate clutch device according to Claim 26, **characterized in that** fastening fingers (311, 314) extend from at least one face side of the coupling ring (262), which fastening fingers engage through the flange (255).

32. Multiplate clutch device according to one of the preceding claims, **characterized in that** the free ends (312) of the fastening fingers (311) are deformed in the manner of rivet heads in order, in the manner of rivets, to connect the receiving pot (252) to the coupling ring (262).

33. Multiplate clutch device according to one of the preceding claims, **characterized in that** the free ends (315) of the fastening fingers (314) are bent in order to fasten the receiving pot (252) to the coupling ring (262).

34. Multiplate clutch device according to one of the preceding claims, **characterized in that** the surface of the coupling part (100, 220, 260) is coated in order to increase wear resistance.

35. Torque-transmitting device in the drivetrain (1) of a motor vehicle for the purpose of transmitting torque between an internal combustion engine (3), which has a crankshaft (4), and a transmission, which has at least one transmission input shaft (31, 42), it being possible for the latter to be coupled to the crankshaft (4) by means of a multiplate clutch device (27, 38) according to one of the preceding claims.

## Revendications

1. Dispositif d'embrayage à disques comprenant au moins un embrayage à disques (27, 38) qui comprend un support de disques extérieurs (26, 36, 250) pour des disques extérieurs et un support de disques intérieurs (28, 40, 140, 210) pour des disques intérieurs, les disques extérieurs et les disques intérieurs pouvant être amenés en engagement par friction les uns avec les autres en vue de transmettre un couple, le support de disques intérieurs (140, 210) présentant un élément de bride (144, 214, 404) ou le support de disques extérieurs (250) présentant une bride (255), **caractérisé en ce qu'**une partie d'accouplement (100, 220, 260) formée d'une bande de matériau façonnée (103, 223, 263) est fixée à l'élément de bride ou à la bride, laquelle partie d'accouplement présente une région d'engagement par correspondance de forme (105, 225, 265) qui sert à connecter le support de disques respectif (140, 210, 250) de manière solidaire en rotation aux disques associés (184-186), et **en ce que** la partie d'accouplement (100, 220, 260) est formée d'une bande de tôle façonnée (103, 223, 263) et présente la configuration d'une bague d'accouplement (102, 222, 262).

2. Dispositif d'embrayage à disques selon la revendication 1, **caractérisé en ce que** la bague d'accouplement (222, 262) est fermée aux extrémités (238, 239) de la bande de matériau (240).

3. Dispositif d'embrayage à disques selon la revendication 1 ou 2, **caractérisé en ce que** la bague d'accouplement (102, 222, 262) présente plusieurs trous de passage (114-116, 231-233, 291-294) s'étendant dans la direction radiale.

4. Dispositif d'embrayage à disques selon l'une quelconque des revendications 1 à 3, **caractérisé en ce que** des doigts de fixation (121-123, 125-127, 131, 132, 134, 135) partent d'au moins un côté frontal de la bague d'accouplement (102).

5. Dispositif d'embrayage à disques selon la revendication 4, **caractérisé en ce que** les extrémités libres (177, 178) des doigts de fixation (131, 134) sont déformées à la manière de têtes de rivets afin de relier un élément de bride (144), respectivement un élément de paroi (150), à la manière d'un rivetage à la bague d'accouplement (102).

6. Dispositif d'embrayage à disques selon la revendication 4, **caractérisé en ce que** les extrémités libres (171, 172) des doigts de fixation (131, 134) sont recourbées afin de relier un élément de bride (144), respectivement un élément de paroi (150), à la bague d'accouplement (102).

7. Dispositif d'embrayage à disques selon la revendication 4, **caractérisé en ce que** les doigts de fixation (125-127, 134, 135) qui partent d'un côté frontal de la bague d'accouplement (102) viennent en prise à travers un élément de bride (144) qui part d'une partie de moyeu (141).

8. Dispositif d'embrayage à disques selon l'une quelconque des revendications 5 à 7, **caractérisé en ce que** la partie de moyeu (141) est formée d'une pièce en tôle.

9. Dispositif d'embrayage à disques selon l'une quelconque des revendications 5 à 8, **caractérisé en ce que** les doigts de fixation (121-123, 131, 132) qui partent de l'autre côté frontal de la bague d'accouplement (102) viennent en prise à travers un élément de paroi (150).

10. Dispositif d'embrayage à disques selon la revendication 9, **caractérisé en ce que** des griffes (156, 157) partent radialement à l'intérieur depuis l'élément de paroi (150), lesquelles griffes viennent en prise dans la partie de moyeu (141).

11. Dispositif d'embrayage à disques selon la revendication 9 ou 10, **caractérisé en ce que** des ailettes directrices (164) font saillie dans la direction axiale à l'intérieur depuis l'élément de paroi (150).

12. Dispositif d'embrayage à disques selon l'une quelconque des revendications 5 à 11, **caractérisé en ce que** les faces latérales d'un espace de passage de fluide de refroidissement (162) limité dans la direction axiale par l'élément de paroi (150) et l'élément de bride (144) sont fermées.

13. Dispositif d'embrayage à disques selon la revendication 12, **caractérisé en ce que** les faces latérales en projection (180, 181) de l'espace de passage de fluide de refroidissement (162) limité dans la direction axiale par l'élément de paroi (150) et l'élément de bride (144) sont pratiquement de même taille.

14. Dispositif d'embrayage à disques selon l'une quelconque des revendications 7 à 10, **caractérisé en ce que** l'élément de paroi (150) présente, radialement à l'intérieur, considéré en coupe transversale, un gradin (155) qui sert de siège de palier.

15. Dispositif d'embrayage à disques selon l'une quelconque des revendications 5 à 14, **caractérisé en ce que** la bague d'accouplement (102) présente une denture extérieure (106).

16. Dispositif d'embrayage à disques selon la revendication 15, **caractérisé en ce que** la denture extérieure (106) est fermée du côté frontal de manière pratiquement étanche aux liquides.

17. Dispositif d'embrayage à disques selon la revendication 15 ou 16, **caractérisé en ce que** la denture extérieure (106) de la bague d'accouplement (102) présente un diamètre de tête de dent (197) qui est inférieur ou égal au diamètre extérieur (198) de l'élément de bride (144).

18. Dispositif d'embrayage à disques selon l'une quelconque des revendications 15 à 17, **caractérisé en ce que** la denture extérieure (106) de la bague d'accouplement (102) présente un diamètre de tête de dent (197) qui est inférieur ou égal au diamètre extérieur (198) de l'élément de paroi (150).

19. Dispositif d'embrayage à disques selon la revendication 18, **caractérisé en ce que** l'élément de paroi (150) vient en prise radialement à l'extérieur autour de la bague d'accouplement (102).

20. Dispositif d'embrayage à disques selon l'une quelconque des revendications 1 à 3, **caractérisé en ce que** la bague d'accouplement (222) présente une denture intérieure (218) qui est en prise avec une denture extérieure complémentaire (215) qui est réalisée sur un élément de bride (214) qui part d'une partie de moyeu (211).

21. Dispositif d'embrayage à disques selon la revendication 20, **caractérisé en ce que** la partie de moyeu (211) est formée d'une pièce en tôle.

22. Dispositif d'embrayage à disques selon la revendication 20 ou 21, **caractérisé en ce que** la bague d'accouplement (222) présente, dans la région d'engagement avec l'élément de bride (214), des nervures opposées par paires dans la direction axiale (228, 229) s'étendant dans la direction périphérique, entre lesquelles l'élément de bride (214) est fixé dans la direction axiale.

23. Dispositif d'embrayage à disques selon l'une quelconque des revendications 1 à 3, **caractérisé en ce que** la bague d'accouplement (262) présente une denture intérieure (266).

24. Dispositif d'embrayage à disques selon la revendication 23, **caractérisé en ce que** le support de disques extérieurs (250) présente une coupelle de réception (252) dans laquelle est reçue la bague d'accouplement (262).

25. Dispositif d'embrayage à disques selon la revendication 23 ou 24, **caractérisé en ce que** la coupelle de réception (252) présente une portion de réception en forme de douille (254).

26. Dispositif d'embrayage à disques selon la revendication 25, **caractérisé en ce que** la portion de réception (254) présente, dans une région de bord axiale, des rainures s'étendant dans la direction périphérique (270, 271).

27. Dispositif d'embrayage à disques selon la revendication 25 ou 26, **caractérisé en ce que** la portion de réception (254) présente, dans une région de bord axiale, des évidements radiaux (274).

28. Dispositif d'embrayage à disques selon l'une quelconque des revendications 21 à 23, **caractérisé en ce que** la portion de réception (254) présente des trous oblongs (302) qui sont plus longs que des trous oblongs (301) qui sont pratiqués dans la bague d'accouplement (262).

29. Dispositif d'embrayage à disques selon la revendication 24, **caractérisé en ce que** l'extrémité en saillie (304, 305) des trous oblongs (301) de la bague d'accouplement (262) dépassant dans les trous oblongs (302) de la portion de réception (254) est matée avec la région de bord des trous oblongs (302) de la portion de réception (254).

30. Dispositif d'embrayage à disques selon l'une quelconque des revendications 21 à 25, **caractérisé en ce qu'**une bride (255) s'étend radialement vers l'intérieur depuis un côté frontal de la portion de réception (254).

31. Dispositif d'embrayage à disques selon la revendication 26, **caractérisé en ce que** des doigts de fixation (311, 314) qui viennent en prise à travers la bride (255) partent d'au moins un côté frontal de la bague d'accouplement (262).

32. Dispositif d'embrayage à disques selon l'une quelconque des revendications précédentes, **caractérisé en ce que** les extrémités libres (312) des doigts de fixation (311) sont déformées à la manière de têtes de rivets, afin de relier la coupelle de réception (252) à la manière d'un rivetage à la bague d'accouplement (262).

33. Dispositif d'embrayage à disques selon l'une quelconque des revendications précédentes, **caractérisé en ce que** les extrémités libres (315) des doigts de fixation (314) sont recourbées afin de fixer la coupelle de réception (252) à la bague d'accouplement (262).

34. Dispositif d'embrayage à disques selon l'une quelconque des revendications précédentes, **caractérisé en ce que** la surface de la partie d'accouplement (100, 220, 260) est revêtue afin d'augmenter la résistance à l'usure.

35. Dispositif de transfert de couple dans la chaîne cinématique (1) d'un véhicule automobile pour le transfert de couple entre un moteur à combustion interne (3) comprenant un vilebrequin (4) et une transmission comprenant au moins un arbre d'entrée de transmission (31, 42), qui peut être accouplé au vilebrequin (4) au moyen d'un dispositif d'embrayage à disques (27, 38) selon l'une quelconque des revendications précédentes.
